(19) Europäisches Patentamt
European Patent Office
Office européen des brevets

(11) EP 4 446 358 A1

(12) EUROPEAN PATENT APPLICATION
published in accordance with Art. 153(4) EPC

(43) Date of publication:
16.10.2024 Bulletin 2024/42

(21) Application number: 23875179.6

(22) Date of filing: 04.10.2023

(51) International Patent Classification (IPC):
*C08G 64/00* (2006.01) *C08L 69/00* (2006.01)
*G02B 1/04* (2006.01) *C08G 64/16* (2006.01)
*C08G 64/30* (2006.01)

(52) Cooperative Patent Classification (CPC):
**C08G 64/00; C08G 64/16; C08G 64/30; C08L 69/00; G02B 1/04**

(86) International application number:
**PCT/KR2023/015162**

(87) International publication number:
**WO 2024/076115 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.10.2022 KR 20220127150**
**28.10.2022 KR 20220141544**

(71) Applicant: **LG Chem, Ltd.**
**Yeongdeungpo-gu**
**Seoul 07336 (KR)**

(72) Inventors:
- **CHOI, Il Hwan**
  **Daejeon 34122 (KR)**
- **KIM, Kyeongmun**
  **Daejeon 34122 (KR)**
- **BAE, Jaesoon**
  **Daejeon 34122 (KR)**
- **BAEK, Hyeonwoo**
  **Daejeon 34122 (KR)**
- **YOO, Seungmin**
  **Daejeon 34122 (KR)**
- **LEE, Seungmook**
  **Daejeon 34122 (KR)**
- **YIM, Hye Jin**
  **Daejeon 34122 (KR)**

(74) Representative: **Plasseraud IP**
**104 Rue de Richelieu**
**CS92104**
**75080 Paris Cedex 02 (FR)**

# (54) POLYCARBONATE RESIN AND PRODUCTION METHOD FOR SAME

(57) The present invention relates to a polycarbonate resin having a relaxation time of 2 seconds to 15 seconds at 250°C and a residual phenol content of 3,000 ppm or less.

EP 4 446 358 A1

## Description

[Technical Field]

This application claims priority to and the benefit of Korean Patent Application Nos. 10-2022-0127150 and 10-2022-0141544 filed in the Korean Intellectual Property Office on October 5, 2022 and October 28, 2022, respectively, the entire contents of which are incorporated herein by reference.

The present specification relates to a polycarbonate resin and a preparation method thereof.

[Background Art]

Optical glass or optical resin is used as an optical material for plastic optical products and optical films such as various lenses, prisms, optical disc substrates, and optical fibers. Although optical glass has excellent heat resistance, transparency, dimensional stability, and chemical resistance, the optical glass has the problems of high material cost, poor moldability, and low productivity.

Meanwhile, optical materials including optical resins can be mass-produced by injection molding. As the optical resin, a polycarbonate resin, a polyester resin, a polyester-carbonate resin, and the like are used.

However, the optical resin has a disadvantage in that processability deteriorates due to its insufficient fluidity. Therefore, it may be difficult to apply the optical resin to the injection molding of an article that requires the aforementioned precision. In order to apply the resin to injection molding, molding temperature, mold temperature, and the like need to be increased, but the molding cycle becomes longer, so that the molding cost increases, or the resin deteriorates, the color deteriorates during molding, and the like.

To solve this problem, examples of a method of improving the fluidity of a resin during the molding of an optical material include methods of lowering the viscosity, lowering the weight average molecular weight, adding a low-molecular weight oligomer, widening the molecular weight distribution, and the like, but excellent physical properties inherent in the resin, such as heat resistance and impact resistance, tend to deteriorate.

Therefore, continuous attempts have been made to improve processability while maintaining the advantages of a resin.

[Detailed Description of the Invention]

[Technical Problem]

An exemplary embodiment of the present specification has been made in an effort to provide a polycarbonate resin and a method for preparing the same.

Another exemplary embodiment of the present specification has been made in an effort to provide a polycarbonate resin composition including the above-described polycarbonate resin and a molded article prepared from the polycarbonate resin composition.

[Technical Solution]

An exemplary embodiment of the present invention provides a polycarbonate resin having a relaxation time of 2 seconds to 15 seconds at 250°C and a residual phenol content of 3,000 ppm or less.

An exemplary embodiment of the present specification provides a polycarbonate resin having a relaxation time of 1 second to 15 seconds at 250°C and a residual phenol content of 3,000 ppm or less and including a first unit of the following Chemical Formula 1; a second unit of the following Chemical Formula 2; and a third unit of the following Chemical Formula 3.

[Chemical Formula 1]

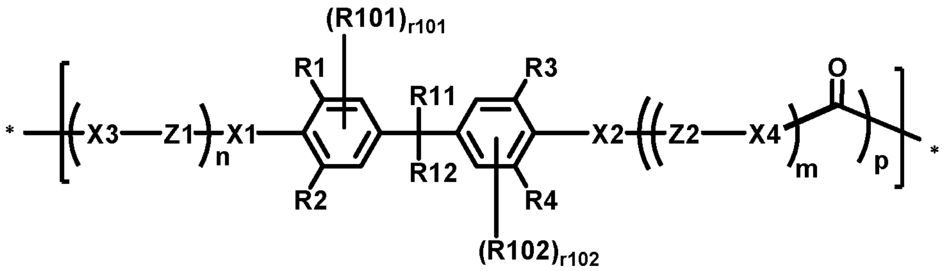

In Chemical Formula 1,

X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a substituted or unsubstituted condensed ring group of an aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,
R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r101 is 1 or 2, and when r101 is 2, two R101's are the same as or different from each other,
r102 is 1 or 2, and when r102 is 2, two R102's are the same as or different from each other,
m and n are each an integer from 0 to 6,
p is an integer of 1 to 6,
when m, n and p are each 2 or higher, two or more structures in each parenthesis are the same as or different from each other, and
* means a moiety linked to the main chain of the resin,

[Chemical Formula 2]

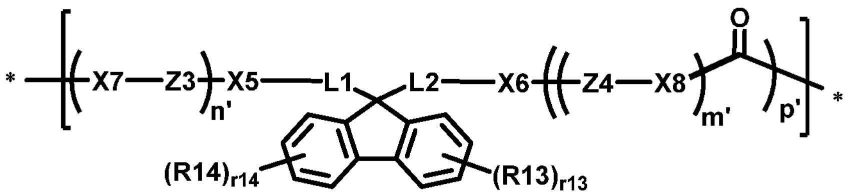

in Chemical Formula 2,
X5 to X8 are the same as or different from each other, and are each independently O or S,
L1 and L2 are the same as or different from each other, and are each independently a substituted or unsubstituted arylene group; or a substituted or unsubstituted heteroarylene group,
R13 and R14 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
Z3 and Z4 are the same as or different from each other, and are each independently a substituted or unsubstituted alkylene group; or a substituted or unsubstituted cycloalkylene group,
m' and n' are each an integer from 0 to 6,
p' is an integer from 1 to 6,

r13 and r14 are each an integer from 1 to 4,
when r13, r14, m', n' and p' are each 2 or higher, two or more structures in each parenthesis are the same as or different from each other, and
* means a moiety linked to the main chain of the resin,

[Chemical Formula 3]

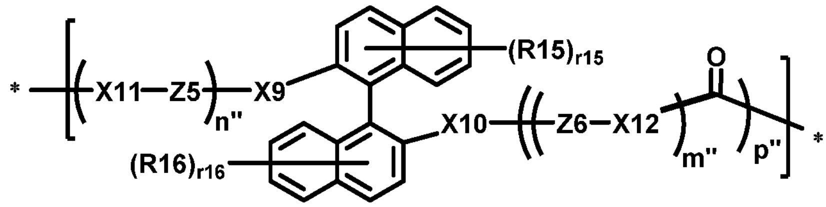

in Chemical Formula 3,
X9 to X12 are the same as or different from each other, and are each independently O or S,
Z5 and Z6 are the same as or different from each other, and are each independently a substituted or unsubstituted alkylene group; or a substituted or unsubstituted cycloalkylene group,
R15 and R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
m" and n" are each an integer from 0 to 6,
p" is an integer from 1 to 6,
r15 and r16 are each an integer from 1 to 6,
when r15, r16, m", n" and p" are each 2 or higher, two or more structures in each parenthesis are the same as or different from each other, and
* means a moiety linked to the main chain of the resin.

Further, an exemplary embodiment of the present invention provides a method for preparing a polycarbonate resin, the method including: polymerizing a composition for preparing the above-described polycarbonate resin, which includes a compound of the following Chemical Formula 1a; a compound of the following Chemical Formula 2a; a compound of the following Chemical Formula 3a; and a polycarbonate precursor.

[Chemical Formula 1a]

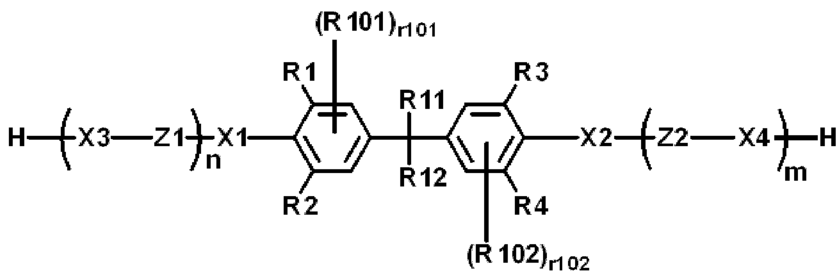

In Chemical Formula 1a,

X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a substituted or unsubstituted condensed ring group of an aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or unsubstituted alkyl group; a substituted or unsubstituted cycloalkyl group; a substituted or unsubstituted aryl group;

or a substituted or unsubstituted heteroaryl group, or are bonded to each other to form a substituted or unsubstituted hydrocarbon ring,

R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,

r101 is 1 or 2, and when r101 is 2, two R101's are the same as or different from each other,

r102 is 1 or 2, and when r102 is 2, two R102's are the same as or different from each other,

m and n are each an integer from 0 to 6,

when m and n are each 2 or higher, two or more structures in each parenthesis are the same as or different from each other,

[Chemical Formula 2a]

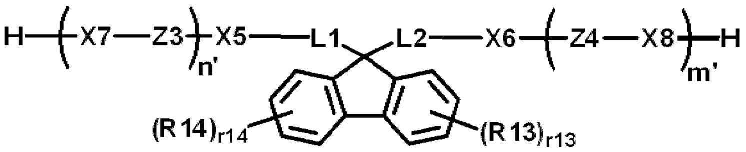

[Chemical Formula 3a]

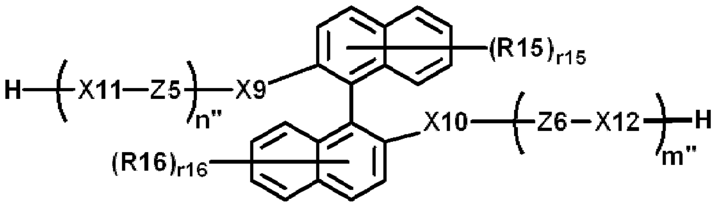

in Chemical Formulae 2a and 3a,

X5 to X12 are the same as or different from each other, and are each independently O or S,

L1 and L2 are the same as or different from each other, and are each independently a substituted or unsubstituted arylene group; or a substituted or unsubstituted heteroarylene group,

Z3 to Z6 are the same as or different from each other, and are each independently a substituted or unsubstituted alkylene group; or a substituted or unsubstituted cycloalkylene group,

R13 to R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,

r13 and r14 are each an integer from 1 to 4,

r15 and r16 are each an integer from 1 to 6,

m', m", n' and n" are each an integer from 0 to 6, and

when r13 to r16, m', m", n' and n" are each 2 or higher, two or more structures in each parenthesis are the same as or different from each other.

Another exemplary embodiment of the present specification provides a polycarbonate resin composition including the polycarbonate resin according to the above-described exemplary embodiment.

Still another exemplary embodiment of the present specification provides a molded article including the polycarbonate resin composition according to the above-described exemplary embodiment.

[Advantageous Effects]

The polycarbonate resin according to an exemplary embodiment of the present specification has a shorter molecular relaxation time and a faster cooling time in an injection mold than polycarbonate resins in the related art, and thus has excellent processability. In addition, the polycarbonate resin has a small decrease in molecular weight during processing and has excellent processing stability.

By using the polycarbonate resin according to the exemplary embodiments of the present specification, an

excellent optical lens, optical film, optical thin film, optical resin, optical fiber, or LED encap having a small thickness can be obtained.

[Best Mode]

Hereinafter, the present specification will be described in more detail.

The polycarbonate resin according to an exemplary embodiment of the present specification has a relaxation time of 2 seconds to 15 seconds at 250°C and a residual phenol content of 3,000 ppm or less.

An exemplary embodiment of the present specification provides a polycarbonate resin having a relaxation time of 1 second to 15 seconds at 250°C and a residual phenol content of 3,000 ppm or less and including the first unit of Chemical Formula 1; the second unit of Chemical Formula 2; and the third unit of Chemical Formula 3.

According to an exemplary embodiment of the present specification, the polycarbonate resin has a relaxation time of 1 second to 15 seconds at 250°C. Alternatively, the relaxation time is 2 seconds to 15 seconds at 250°C. The relaxation time is specifically 2.5 seconds to 14.5 seconds, and more specifically 3.39 seconds to 14.2 seconds, at 250°C.

When the polycarbonate resin satisfies the relaxation time at the temperature, the cooling time in the mold during injection molding is fast due to the relatively short molecular relaxation time, the processing load is low, and the time between filling cycles is reduced, so that the relaxation time is reduced. Therefore, phenomena such as weld lines, cracks, warpage, birefringence, and short molding during injection molding are reduced.

For the relaxation time according to an exemplary embodiment of the present specification, any method used in the art may be used without any limitation, but the relaxation time was specifically measured at 250°C and 0.1 Hz to 100 Hz using a hybrid rheometer (discovery (HR-2)). When strain becomes 30% by applying shear force at 250°C, and then the force is removed, the viscoelastic behavior of a polymer occurring at high temperature (250°C) is measured by measuring the speed at which the applied shear force returns to 1 Pa (=1 $N/m^2$). The shear force is maximally applied to the extent that the molten polymer moves, and in this case, the stress is 100 Pa or more. Thereafter, the stress is quickly removed to measure the time taken to return to 1 Pa, and the time it takes for the stress to return to the level described above means the relaxation time.

In an exemplary embodiment of the present specification, the reason why the relaxation time is important is that when a resin is cooled with residual stress during the cooling of an injection product in a mold during the injection of the resin, problems such as physical damage due to weak external force may occur. Therefore, when the relaxation time according to an exemplary embodiment of the present specification is provided, residual stress is small, so that problems during resin injection molding are remarkably reduced. However, the longer the relaxation time is, the more residual stress there is, so physical damage may easily occur even with a weak external force.

When the residual phenol content of the polycarbonate resin according to one embodiment of the present specification is 3,000 ppm or less, the polycarbonate resin has a small decrease in molecular weight during processing, and the polycarbonate resin has excellent processing stability. However, when the phenol content exceeds the above range, strength and physical properties deteriorate due to the decrease in the molecular weight of the polycarbonate resin, and problems such as cracking of the injection product during processing may occur. Therefore, the residual phenol content is preferably 3,000 ppm or less.

According to an exemplary embodiment of the present specification, the polycarbonate resin has a residual phenol content of 3,000 ppm or less. The polycarbonate resin has a residual phenol content of specifically 10 ppm to 3,000 ppm, 50 ppm to 3,000 ppm, and 100 ppm to 3,000 ppm, and more specifically 200 ppm to 2,000 ppm, 200 ppm to 1,200ppm, or 470 ppm to 720 ppm.

In the present specification, the content (concentration) of residual phenol may be calculated as follows. First, after 1.0 g of pellets are dried and 1 g of a solid resin is dissolved in 12 ml of methylene chloride (MC) and 18 ml of methanol (MeOH), the resulting solution is filtered with a filter with a pore size of 0.2 μm, and then HPLC/UV is measured to calculate the content of residual phenol. (Measurement wavelength: 200 um HPCL, mobile phase A: acetonitrile, mobile phase B: $H_2O$, Column: Capcellpak C18 (4.6 mm ID × 50 mm, 5 μm), column temperature: 40°C, Flow rate: 1 ml/min, Injection volume: 5 ul, run time: 10 minutes)

When one part "includes" one constituent element in the present specification, unless otherwise specifically described, this does not mean that another constituent element is excluded, but means that another constituent element may be further included.

Unless otherwise defined in the present invention, all technical and scientific terms used in the present invention have the same meaning as commonly understood by one with ordinary skill in the art to which the present invention pertains.

Although methods and materials similar to or equivalent to those described in the present invention may be used in the practice or in the test of exemplary embodiments of the present invention, suitable methods and materials will be described below. All publications, patent applications, patents, and other references mentioned in the present invention are hereby incorporated by reference in their entireties, and in the case of conflict, the present invention,

including definitions, will control unless a particular passage is mentioned. In addition, the materials, methods, and examples are illustrative only and are not intended to be limiting.

According to an exemplary embodiment of the present specification, the polycarbonate resin has a high shear viscosity of 10Pa·s to 200Pa·s at 250°C. When the polycarbonate resin has the high shear viscosity at the temperature, the processing load is low, so that phenomena such as weld lines, cracks, warpage, birefringence, and short molding during injection molding are reduced.

According to an exemplary embodiment of the present specification, the polycarbonate resin has a high shear viscosity of 10Pa·s to 200Pa·s at 250°C. The polycarbonate resin has a high shear viscosity of preferably 30 Pa·s to 200 Pa·s, more preferably 50 Pa·s to 190 Pa·s, and even more preferably 60.7 Pa·s to 146 Pa·s.

According to an exemplary embodiment of the present specification, the polycarbonate resin has a high shear viscosity of 10 Pa·s to 200 Pa·s at 10 Hz or 63 Hz.

According to an exemplary embodiment of the present specification, the polycarbonate resin has a high shear viscosity of 10 Pa·s to 200 Pa·s at 10 Hz.

According to an exemplary embodiment of the present specification, the polycarbonate resin has a high shear viscosity of 10 Pa·s to 200 Pa·s at 63 Hz.

According to an exemplary embodiment of the present specification, the polycarbonate resin has a high shear viscosity of 10 Pa·s to 200 Pa·s at any one or more of 250°C and 10 Hz and 250°C and 63 Hz.

According to an exemplary embodiment of the present specification, the polycarbonate resin has a high shear viscosity of 10 Pa·s to 200 Pa·s at 250°C and 10 Hz and/or 250°C and 63 Hz.

According to an exemplary embodiment of the present specification, the polycarbonate resin has a high shear viscosity of 10 Pa·s to 200 Pa·s at 250°C and 10 Hz and 250°C and 63 Hz.

According to an exemplary embodiment of the present specification, the polycarbonate resin has a high shear viscosity of 10 Pa·s to 200 Pa·s at 250°C and 10 Hz or 250°C and 63 Hz.

According to an exemplary embodiment of the present specification, the polycarbonate resin has a high shear viscosity of 10 Pa·s to 200 Pa·s at 250°C and 10 Hz.

According to an exemplary embodiment of the present specification, the polycarbonate resin has a high shear viscosity of 10 Pa·s to 200 Pa·s at 250°C and 63 Hz.

In the present specification, when the polycarbonate resin has the above-described high shear viscosity at the above-described frequency, there is an advantage in that processing is facilitated due to excellent flowability during processing using the extrusion/injection of a thermoplastic polymer.

According to an exemplary embodiment of the present specification, the polycarbonate resin has a high shear viscosity of 10 Pa·s to 200 Pa·s at any one or more of 250°C and 10 Hz and 250°C and 63 Hz. The polycarbonate resin has a high shear viscosity of preferably 30 Pa·s to 200 Pa·s, more preferably 50 Pa·s to 190 Pa·s, and even more preferably 60.7 Pa·s to 146 Pa·s.

According to an exemplary embodiment of the present specification, the polycarbonate resin has a high shear viscosity of 10 Pa·s to 200 Pa·s at 250°C and 10 Hz and/or 250°C and 63 Hz. The polycarbonate resin has a high shear viscosity of preferably 30 Pa·s to 200 Pa·s, more preferably 50 Pa·s to 190 Pa·s, and even more preferably 60.7 Pa·s to 146 Pa·s.

According to an exemplary embodiment of the present specification, the polycarbonate resin has a high shear viscosity of 10 Pa·s to 200 Pa·s at 250°C and 10 Hz. The polycarbonate resin has a high shear viscosity of preferably 30 Pa·s to 200 Pa·s, more preferably 50 Pa·s to 190 Pa·s, and even more preferably 76.3 Pa·s to 146 Pa·s.

According to an exemplary embodiment of the present specification, the polycarbonate resin has a high shear viscosity of 10 Pa·s to 200 Pa·s at 250°C and 63 Hz. The polycarbonate resin has a high shear viscosity of preferably 30 Pa·s to 200 Pa·s, more preferably 50 Pa·s to 190 Pa·s, and even more preferably 60.7 Pa·s to 99.4 Pa·s.

According to an exemplary embodiment of the present specification, the polycarbonate resin includes a first unit of the following Chemical Formula 1; a second unit of the following Chemical Formula 2; and a third unit of the following Chemical Formula 3.

[Chemical Formula 1]

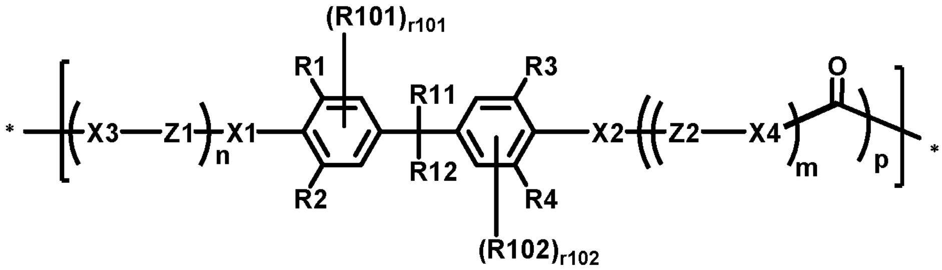

In Chemical Formula 1,

X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a substituted or unsubstituted condensed ring group of an aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,
R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r101 is 1 or 2, and when r101 is 2, two R101's are the same as or different from each other,
r102 is 1 or 2, and when r102 is 2, two R102's are the same as or different from each other,
m and n are each an integer from 0 to 6,
p is an integer of 1 to 6,
when m, n and p are each 2 or higher, two or more structures in each parenthesis are the same as or different from each other, and
* means a moiety linked to the main chain of the resin,

[Chemical Formula 2]

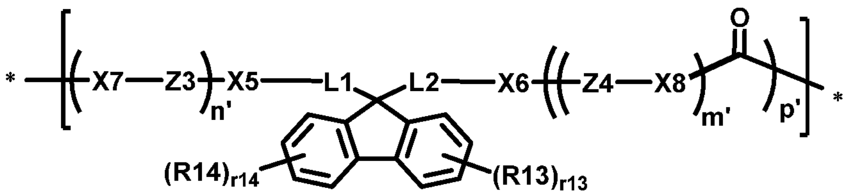

in Chemical Formula 2,
X5 to X8 are the same as or different from each other, and are each independently O or S,
L1 and L2 are the same as or different from each other, and are each independently a substituted or unsubstituted arylene group; or a substituted or unsubstituted heteroarylene group,
R13 and R14 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
Z3 and Z4 are the same as or different from each other, and are each independently a substituted or unsubstituted alkylene group; or a substituted or unsubstituted cycloalkylene group,
m' and n' are each an integer from 0 to 6,
p' is an integer from 1 to 6,

r13 and r14 are each an integer from 1 to 4,
when r13, r14, m', n' and p' are each 2 or higher, two or more structures in each parenthesis are the same as or different from each other, and
* means a moiety linked to the main chain of the resin,

[Chemical Formula 3]

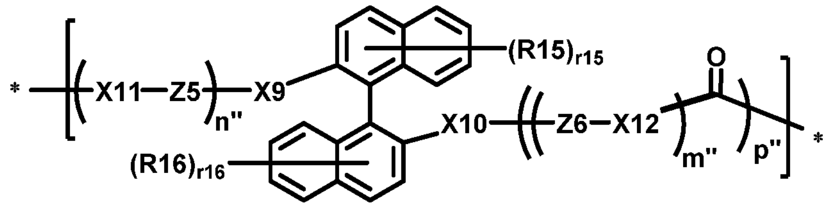

in Chemical Formula 3,
X9 to X12 are the same as or different from each other, and are each independently O or S,
Z5 and Z6 are the same as or different from each other, and are each independently a substituted or unsubstituted alkylene group; or a substituted or unsubstituted cycloalkylene group,
R15 and R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
m" and n" are each an integer from 0 to 6,
p" is an integer from 1 to 6,
r15 and r16 are each an integer from 1 to 6,
when r15, r16, m", n" and p" are each 2 or higher, two or more structures in each parenthesis are the same as or different from each other, and
* means a moiety linked to the main chain of the resin.

When the polycarbonate resin includes the first unit of Chemical Formula 1, the polycarbonate resin includes a relatively small isopropylidene group compared to a large substituent such as fluorene, so that the process is economical and the probability of processing defects is reduced because the cooling time in the mold during injection is fast due to the short relaxation time of the polycarbonate resin and the processability of the polycarbonate resin is excellent.

According to an exemplary embodiment of the present specification, the polycarbonate resin includes two or more second units of Chemical Formula 2.

According to an exemplary embodiment of the present specification, the polycarbonate resin includes two or more of the second unit of Chemical Formula 2.

According to an exemplary embodiment of the present specification, the polycarbonate resin provides a polycarbonate resin including the first unit of Chemical Formula 1; two or more second units of Chemical Formula 2; and the third unit of Chemical Formula 3.

According to an exemplary embodiment of the present specification, in the polycarbonate resin, Chemical Formulae 2 and 3 may complement the glass transition temperature (Tg) of the first unit of Chemical Formula 1, or make the chain behavior of the first unit of Chemical Formula 1 flexible, and there are technical effects advantageous for the injection processing of molded articles.

In an exemplary embodiment of the present specification, the polycarbonate resin has a weight average molecular weight of 3,000g/mol to 500,000 g/mol, preferably 5,000 g/mol to 300,000 g/mol, 7,000 g/mol to 250,000 g/mol, 8,000 g/mol to 200,000 g/mol. The polycarbonate resin has a weight average molecular weight of more preferably 9,000 g/mol to 150,000 g/mol, 10,000 g/mol to 100,000 g/mol, 12,000 g/mol to 80,000 g/mol, and 13,000 g/mol to 60,000 g/mol.

In an exemplary embodiment of the present invention, the polycarbonate resin has a number average molecular weight of 2,000 g/mol to 300,000 g/mol, 3,000 g/mol to 200,000 g/mol, 4,000 g/mol to 150,000 g/mol, 4,500g/mol to 100,000 g/mol, preferably 5,000g/mol to 80,000 g/mol.

When the polycarbonate resin satisfies the above-described weight average molecular weight and number average molecular weight ranges, the polycarbonate resin may have optimum fluidity and processability.

In the present specification, the weight average molecular weights (Mws) of the polycarbonate resin and the oligomer used in the preparation thereof may be measured by gel permeation chromatography (GPC) using a polystyrene (PS) standard using Agilent 1200 series. Specifically, the weight average molecular weights may be measured using an Agilent 1200 series device using a Polymer Laboratories PLgel MIX-B 300 mm length column, and in this case, the

measurement temperature is 40°C, the used solvent is tetrahydrofuran (THF), and the flow rate is 1 mL/min. The sample of the polycarbonate resin or oligomer is each prepared at a concentration of 10 mg/10 mL, and then fed in an amount of 10 μL, and the weight average molecular weight (Mw) value is induced using a calibration curve formed using a polystyrene standard. In this case, nine types of polystyrene standard products with a molecular weight (g/mol) of 2,000 / 10,000 / 30,000 / 70,000 / 200,000 / 700,000 / 2,000,000 / 4,000,000 / 10,000,000 are used.

According to an exemplary embodiment of the present specification, a refractive index of the polycarbonate resin is 1.6 to 1.8 at 587 nm. The refractive index may be preferably 1.6 to 1.75, more preferably 1.6 to 1.72, and more preferably 1.660 to 1.669. When the resin satisfies the above refractive index, a thin and light optical lens can be manufactured when the resin is applied to a molded article such as an optical lens.

In an exemplary embodiment of the present specification, the Abbe's Number of the polycarbonate resin, which is measured and calculated at a wavelength of 486, 587, and 656 nm may be 5 to 45. Preferably, the Abbe's Number may be 10 to 25.

When the polycarbonate resin satisfies the above Abbe's Number range, there is an effect that the dispersion is decreased and the sharpness is increased when the resin is applied to a molded article such as an optical lens.

The Abbe's Number may be specifically obtained by the following Equation by measuring the refractive index (nD, nF, and nC) at a wavelength of D (587 nm), F (486 nm), and C (656 nm), respectively at 25°C.

$$\text{Abbe's Number} = (nD - 1) / (nF - nC)$$

The refractive index can be measured by the prism couple method, and for example, SPA-3DR manufactured by SAIRON Technology Inc. may be used, but is not limited thereto.

The refractive index of the resin may be calculated by measuring the change in the amount of light reflected from a prepared sample in which the resin is made to be flat by placing a slide glass on a heating plate at 200°C, using a prism coupler. When the prepared sample is brought into contact with the prism, and then the laser is incident on the prism, most of the incident laser is totally reflected, but when specific incident angle and conditions are satisfied, light is coupled because an evanescent field is generated at the boundary surface. By measuring an angle at which coupling occurs, and as a result, the intensity of the light detected by a detector sharply decreases, the refractive index of the film can be automatically calculated by the prism coupler from the parameters related to the polarization mode of light and the refractive indices of the prism and the substrate.

In an exemplary embodiment of the present specification, the polycarbonate resin may have a glass transition temperature (Tg) of 90°C to 200°C. The glass transition temperature may be preferably 100°C to 190°C, 120°C to 170°C, and 130°C to 160°C, and is even more preferably 141°C to 142°C.

When the polycarbonate resin satisfies the above glass transition temperature range, the glass transition temperature is easily adjusted when a polycarbonate resin composition is prepared by mixing with a resin having excellent heat resistance and injectability and having a glass transition temperature different from the above-described range, so that the physical properties desired in the present specification may be satisfied.

The glass transition temperature (Tg) may be measured by a differential scanning calorimeter (DSC). Specifically, the glass transition temperature may be measured from a graph obtained by heating 5.5 mg to 8.5 mg of the polycarbonate resin sample to 270°C under a nitrogen atmosphere, and then scanning the resin sample while heating the resin sample at a heating rate of 10°C/min during the second heating after cooling.

According to an exemplary embodiment of the present specification, the polycarbonate resin has a melt index (MI) of 5 to 150, specifically 10 to 100, and even more specifically 20 to 80, or 41 to 53. The above-described MI may be measured by a method used in the art, and specifically, the measurement is performed using a Melt indexer (Mi 2.2) manufactured by Goettfert Co., Ltd. A sample is dried in an oven at 120°C for 5 hours or more, the dried sample is put into a device and melted for 5 minutes at a measurement temperature (260°C), and then the weight of the sample passing through the nozzle for 5 seconds when applying pressure with a weight of 2.16 kg is measured and converted into a unit of g/10 min to calculate the melt index (MI).

When the polycarbonate resin has the aforementioned melt index, the polycarbonate resin exhibits properties suitable for injection molding by maintaining appropriate flowability.

Examples of the substituents in the present specification will be described below, but are not limited thereto.

In the present specification,

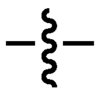

means a moiety to be linked.

The term "substitution" means that a hydrogen atom bonded to a carbon atom of a compound is changed into another substituent, and a position to be substituted is not limited as long as the position is a position at which the hydrogen atom is substituted, that is, a position at which the substituent may be substituted, and when two or more are substituted, the two or more substituents may be the same as or different from each other.

In the present specification, the term "substituted or unsubstituted" means being substituted with one or more substituents selected from the group consisting of deuterium; a halogen group; a hydroxyl group; a cyano group; an alkyl group; a cycloalkyl group; an alkoxy group; an alkenyl group; an aryloxy group; an arylthio group; alkylthio group; a silyl group; an aryl group; and a heteroaryl group, being substituted with a substituent to which two or more substituents among the exemplified substituents are linked, or having no substituent.

In the present specification, the fact that two or more substituents are linked indicates that hydrogen of any one substituent is linked to another substituent. For example, when two substituents are linked to each other, a phenyl group and a naphthyl group may be linked to each other to become a substituent of

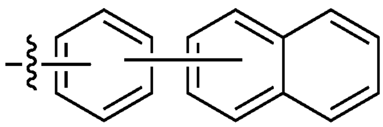

or

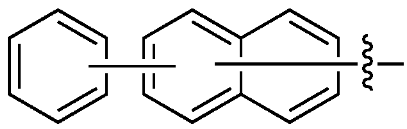

.

Further, the case where three substituents are linked to one another includes not only a case where (Substituent 1)-(Substituent 2)-(Substituent 3) are consecutively linked to one another, but also a case where (Substituent 2) and (Substituent 3) are linked to (Substituent 1). For example, a phenyl group, a naphthyl group , and an isopropyl group may be linked to one another to become a substituent of

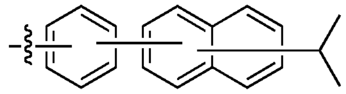

,

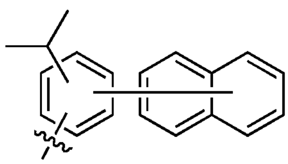

, or

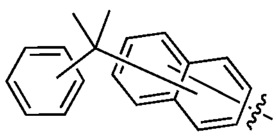

.

The above-described definition also applies equally to the case where four or more substituents are linked to one another.

In the present specification, examples of a halogen group include fluorine, chlorine, bromine or iodine.

In the present specification, the alkyl group may be straight-chained or branched, and the number of carbon atoms thereof is not particularly limited, but is preferably 1 to 30. Specific examples thereof include methyl, ethyl, propyl, n-propyl, isopropyl, butyl, n-butyl, isobutyl, tert-butyl, sec-butyl, 1-methyl-butyl, 1-ethylbutyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, cyclopentylmethyl, cyclohexylmethyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethyl-propyl, isohexyl, 4-methylhexyl, 5-methylhexyl, and the like, but are not limited thereto.

In the present specification, a cycloalkyl group is not particularly limited, but has preferably 3 to 30 carbon atoms, and specific examples thereof include cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl, an adamantyl group, and the like, but are not limited thereto.

In the present specification, the alkoxy group may be straight-chained, branched, or cyclic. The number of carbon atoms of the alkoxy group is not particularly limited, but is preferably 1 to 30. Specific examples thereof include

methoxy, ethoxy, n-propoxy, isopropoxy, n-butoxy, isobutoxy, tert-butoxy, sec-butoxy, n-pentyloxy, neopentyloxy, isopentyloxy, n-hexyloxy, 3,3-dimethylbutyloxy, 2-ethylbutyloxy, n-octyloxy, n-nonyloxy, n-decyloxy, benzyloxy, p-methylbenzyloxy, and the like, but are not limited thereto.

In the present specification, the alkenyl group may be straight-chained or branched, and the number of carbon atoms thereof is not particularly limited, but is preferably 2 to 30. Specific examples thereof include vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, a stilbenyl group, a styrenyl group, and the like, but are not limited thereto.

In the present specification, an aryl group is not particularly limited, but has preferably 6 to 50 carbon atoms, and the aryl group may be monocyclic or polycyclic.

When the aryl group is a monocyclic aryl group, the number of carbon atoms is not particularly limited, but is preferably 6 to 30. Specific examples of the monocyclic aryl group include a phenyl group, a biphenyl group, a terphenyl group, and the like, but are not limited thereto.

When the aryl group is a polycyclic aryl group, the number of carbon atoms thereof is not particularly limited, but is preferably 10 to 50. Specific examples of the polycyclic aryl group include a naphthyl group, an anthracene group, a phenanthrene group, a triphenylene group, a pyrene group, a phenalene group, a perylene group, a chrysene group, a fluorene group, and the like, but are not limited thereto.

In the present specification, the fluorene group may be substituted, and adjacent groups may be bonded to each other to form a ring.

Examples of the fluorene group include

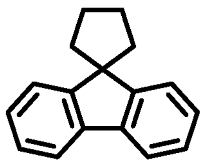
,

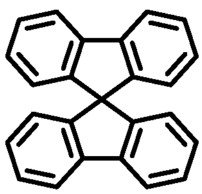
,
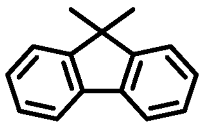
,
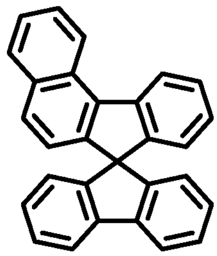
,
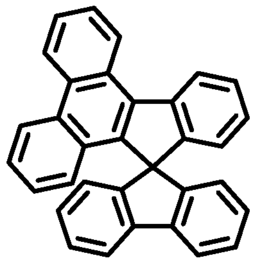
,

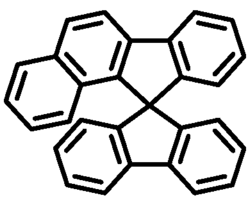
,
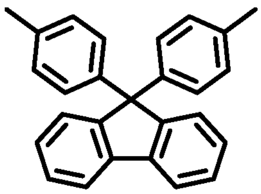
,
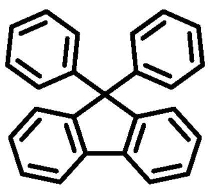
,

and the like, but are not limited thereto.

In the present specification, an "adjacent" group may mean a substituent substituting an atom directly linked to an atom substituted by the corresponding substituent, a substituent sterically most closely positioned to the corresponding substituent, or another substituent substituting an atom substituted by the corresponding substituent. For example, two substituents substituting ortho positions in a benzene ring, and two substituents substituting the same carbon in an aliphatic ring may be interpreted as groups "adjacent" to each other.

In the present specification, a heteroaryl group includes one or more atoms other than carbon, that is, one or more heteroatoms, and specifically, the heteroatom may include one or more atoms selected from the group consisting of O, N, Se, S, and the like. The number of carbon atoms thereof is not particularly limited, but is preferably 2 to 30, and the heteroaryl group may be monocyclic or polycyclic. Examples of the heteroaryl group include a thiophene group, a furan group, a pyrrole group, an imidazole group, a thiazole group, an oxazole group, an oxadiazole group, a pyridine group, a bipyridine group, a pyrimidine group, a triazine group, a triazole group, an acridine group, a pyridazine group,

a pyrazine group, a quinoline group, a quinazoline group, a quinoxaline group, a phthalazine group, a pyridopyrimidine group, a pyridopyrazine group, a pyrazinopyrazine group, an isoquinoline group, an indole group, a carbazole group, a benzoxazole group, a benzimidazole group, a benzothiazole group, a benzocarbazole group, a benzothiophene group, a dibenzothiophene group, a benzofuran group, a phenanthridine group, a phenanthroline group, an isoxazole group, a thiadiazole group, a dibenzofuran group, a dibenzosilole group, a phenoxathiin group, a phenoxazine group, a phenothiazine group, a dihydroindenocarbazole group, a spirofluorenexanthene group, a spirofluorenethioxanthene group, a tetrahydronaphthothiophene group, a tetrahydronaphthofuran group, a tetrahydrobenzothiophene group, a tetrahydrobenzofuran group, and the like, but are not limited thereto.

In the present specification, the silyl group may be an alkylsilyl group, an arylsilyl group, an alkylarylsilyl group, a heteroarylsilyl group, and the like. The above-described examples of the alkyl group may be applied to the alkyl group in the alkylsilyl group, the above-described examples of the aryl group may be applied to the aryl group in the arylsilyl group, the examples of the alkyl group and the aryl group may be applied to the alkyl group and the aryl group in the alkylarylsilyl group, and the examples of the heterocyclic group may be applied to the heteroaryl group in the heteroarylsilyl group.

In the present specification, the aryloxy group may be represented by -ORo, and the description on the above-described aryl group is applied to Ro.

In the present specification, the arylthio group may be represented by -SRs1, and the description on the above-described aryl group is applied to Rs1.

In the present specification, the alkylthio group may be represented by -SRs2, and the description on the above-described alkyl group is applied to Rs2.

In the present specification, an alkylene group means a group having two bonding positions in an alkyl group, that is, a divalent group. The above-described description on the alkyl group may be applied to the alkylene group, except for a divalent alkylene group.

In the present specification, the cycloalkylene group means a group having two bonding positions in a cycloalkyl group, that is, a divalent group. The above-described description on the cycloalkyl group may be applied to the cycloalkylene groups, except for a divalent cycloalkylene group.

An exemplary embodiment of the present invention provides a method for preparing a polycarbonate resin, the method including: polymerizing a composition for preparing the polycarbonate resin, which includes a compound of the following Chemical Formula 1a; a compound of the following Chemical Formula 2a; a compound of the following Chemical Formula 3a; and a polycarbonate precursor.

[Chemical Formula 1a]

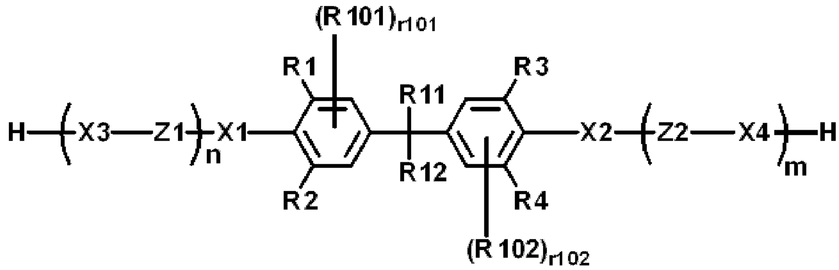

In Chemical Formula 1a,

X1 to X4 are the same as or different from each other, and are each independently O or S,

R1 to R4 are the same as or different from each other, and are each independently hydrogen; a substituted or unsubstituted alkyl group; a substituted or unsubstituted cycloalkyl group; a substituted or unsubstituted aryl group; a substituted or unsubstituted condensed ring group of an aromatic hydrocarbon ring and an aliphatic hydrocarbon ring; or a substituted or unsubstituted heteroaryl group,

Z1 and Z2 are the same as or different from each other, and are each independently a substituted or unsubstituted alkylene group; or a substituted or unsubstituted cycloalkylene group,

R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,

R101 and R102 are the same as or different from each other, and are each independently hydrogen; a substituted or unsubstituted alkyl group; a substituted or unsubstituted cycloalkyl group; a substituted or unsubstituted aryl

group; or a substituted or unsubstituted heteroaryl group,
r101 is 1 or 2, and when r101 is 2, two R101's are the same as or different from each other,
r102 is 1 or 2, and when r102 is 2, two R102's are the same as or different from each other,
m and n are each an integer from 0 to 6,
when m and n are each 2 or higher, two or more structures in each parenthesis are the same as or different from each other,

[Chemical Formula 2a]

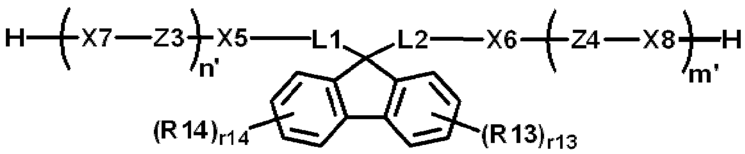

[Chemical Formula 3a]

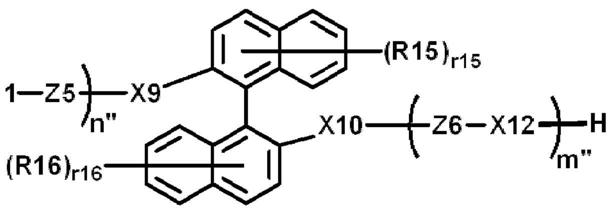

in Chemical Formulae 2a and 3a,
X5 to X12 are the same as or different from each other, and are each independently O or S,
L1 and L2 are the same as or different from each other, and are each independently a substituted or unsubstituted arylene group; or a substituted or unsubstituted heteroarylene group,
Z3 to Z6 are the same as or different from each other, and are each independently a substituted or unsubstituted alkylene group; or a substituted or unsubstituted cycloalkylene group,
R13 to R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
r13 and r14 are each an integer from 1 to 4,
r15 and r16 are each an integer from 1 to 6,
m', m", n' and n" are each an integer from 0 to 6, and
when r13 to r16, m', m", n' and n" are each 2 or higher, two or more structures in each parenthesis are the same as or different from each other.

An exemplary embodiment of the present invention provides a method for preparing a polycarbonate resin, the method including: polymerizing a composition for preparing the polycarbonate resin, which includes the compound of Chemical Formula 1a; the compound of Chemical Formula 2a; the compound of Chemical Formula 3a; and a polycarbonate precursor.

An exemplary embodiment of the present invention provides a method for preparing a polycarbonate resin, the method including: polymerizing a composition for preparing the polycarbonate resin, which includes the compound of Chemical Formula 1a; the two or more compounds of Chemical Formula 2a; the compound of Chemical Formula 3a; and a polycarbonate precursor.

The relaxation time and residual phenol content of the polycarbonate resin are as described above.

According to an exemplary embodiment of the present specification, X1 is O.

According to an exemplary embodiment of the present specification, X2 is O.

According to an exemplary embodiment of the present specification, X3 is O.

According to an exemplary embodiment of the present specification, X4 is O.

According to an exemplary embodiment of the present specification, X5 is O.

According to an exemplary embodiment of the present specification, X6 is O.

According to an exemplary embodiment of the present specification, X7 is O.

According to an exemplary embodiment of the present specification, X8 is O.

According to an exemplary embodiment of the present specification, X9 is O.

According to an exemplary embodiment of the present specification, X10 is O.

According to an exemplary embodiment of the present specification, X11 is O.

According to an exemplary embodiment of the present specification, X12 is O.

According to an exemplary embodiment of the present specification, X1 is S.

According to an exemplary embodiment of the present specification, X2 is S.

According to an exemplary embodiment of the present specification, X3 is S.

According to an exemplary embodiment of the present specification, X4 is S.

According to an exemplary embodiment of the present specification, X5 is S.

According to an exemplary embodiment of the present specification, X6 is S.

According to an exemplary embodiment of the present specification, X7 is S.

According to an exemplary embodiment of the present specification, X8 is S.

According to an exemplary embodiment of the present specification, X9 is S.

According to an exemplary embodiment of the present specification, X10 is S.

According to an exemplary embodiment of the present specification, X11 is S.

According to an exemplary embodiment of the present specification, X12 is S.

According to an exemplary embodiment of the present specification, Z1 and Z2 are the same as or different from each other, and are each independently a straight-chained or branched alkylene group having 1 to 30 carbon atoms.

According to an exemplary embodiment of the present specification, Z1 and Z2 are the same as or different from each other, and are each independently a straight-chained or branched alkylene group having 1 to 20 carbon atoms.

According to an exemplary embodiment of the present specification, Z1 and Z2 are the same as or different from each other, and are each independently a straight-chained or branched alkylene group having 1 to 10 carbon atoms.

According to an exemplary embodiment of the present specification, Z1 and Z2 are an ethylene group.

According to an exemplary embodiment of the present specification, Z3 and Z4 are the same as or different from each other, and are each independently a straight-chained or branched alkylene group having 1 to 30 carbon atoms.

According to an exemplary embodiment of the present specification, Z3 and Z4 are the same as or different from each other, and are each independently a straight-chained or branched alkylene group having 1 to 20 carbon atoms.

According to an exemplary embodiment of the present specification, Z3 and Z4 are the same as or different from each other, and are each independently a straight-chained or branched alkylene group having 1 to 10 carbon atoms.

According to an exemplary embodiment of the present specification, Z3 and Z4 are an ethylene group.

According to an exemplary embodiment of the present specification, Z5 and Z6 are the same as or different from each other, and are each independently a straight-chained or branched alkylene group having 1 to 30 carbon atoms.

According to an exemplary embodiment of the present specification, Z5 and Z6 are the same as or different from each other, and are each independently a straight-chained or branched alkylene group having 1 to 20 carbon atoms.

According to an exemplary embodiment of the present specification, Z5 and Z6 are the same as or different from each other, and are each independently a straight-chained or branched alkylene group having 1 to 10 carbon atoms.

According to an exemplary embodiment of the present specification, Z5 and Z6 are an ethylene group.

According to an exemplary embodiment of the present specification, L1 and L2 are the same as or different from each other, and are each independently a monocyclic or polycyclic arylene group having 6 to 30 carbon atoms, which is unsubstituted or substituted with a straight-chained or branched alkyl group having 1 to 30 carbon atoms, or a monocyclic or polycyclic aryl group having 6 to 30 carbon atoms.

According to an exemplary embodiment of the present specification, L1 and L2 are the same as or different from each other, and are each independently a monocyclic or polycyclic arylene group having 6 to 20 carbon atoms, which is unsubstituted or substituted with a straight-chained or branched alkyl group having 1 to 20 carbon atoms, or a monocyclic or polycyclic aryl group having 6 to 20 carbon atoms.

According to an exemplary embodiment of the present specification, L1 and L2 are the same as or different from each other, and are each independently a phenylene group which is unsubstituted or substituted with a methyl group, a phenyl group, or a naphthyl group; or a divalent naphthyl group.

According to an exemplary embodiment of the present specification, R1 to R4 are the same as or different from each other, and are each independently hydrogen; a monocyclic or polycyclic aryl group having 6 to 30 carbon atoms, which is unsubstituted or substituted with a cyano group, a straight-chained or branched alkyl group having 1 to 30 carbon atoms, a straight-chained or branched alkenyl group having 2 to 30 carbon atoms, or a monocyclic or polycyclic heterocyclic group having 2 to 30 carbon atoms; a condensed ring group of a monocyclic or polycyclic aromatic hydrocarbon ring having 6 to 30 carbon atoms and a monocyclic or polycyclic aliphatic hydrocarbon ring having 3 to 30 carbon atoms; or a polycyclic heteroaryl group having 6 to 30 carbon atoms.

According to an exemplary embodiment of the present specification, R1 to R4 are the same as or different from each other, and are each independently hydrogen; a monocyclic or polycyclic aryl group having 6 to 20 carbon atoms,

which is unsubstituted or substituted with a cyano group, a straight-chained or branched alkyl group having 1 to 20 carbon atoms, a straight-chained or branched alkenyl group having 2 to 20 carbon atoms, or a monocyclic or polycyclic heterocyclic group having 2 to 20 carbon atoms; a condensed ring group of a monocyclic or polycyclic aromatic hydrocarbon ring having 6 to 20 carbon atoms and a monocyclic or polycyclic aliphatic hydrocarbon ring having 3 to 20 carbon atoms; or a polycyclic heteroaryl group having 6 to 20 carbon atoms.

According to an exemplary embodiment of the present specification, R1 to R4 are the same as or different from each other, and are each independently hydrogen; a phenyl group which is unsubstituted or substituted with a cyano group or a methyl group; a naphthyl group which is unsubstituted or substituted with a cyano group; a dihydroindene group; or a quinoline group.

According to an exemplary embodiment of the present specification, R11 and R12 are the same as or different from each other, and are each independently a straight-chained or branched alkyl group having 1 to 30 carbon atoms; a monocyclic or polycyclic cycloalkyl group having 6 to 30 carbon atoms; a monocyclic or polycyclic aryl group having 6 to 30 carbon atoms; or a monocyclic or polycyclic heteroaryl group having 2 to 30 carbon atoms, or are bonded to each other to form a monocyclic or polycyclic aliphatic hydrocarbon ring having 6 to 30 carbon atoms, which is unsubstituted or substituted with a straight-chained or branched alkyl group having 1 to 30 carbon atoms.

According to an exemplary embodiment of the present specification, R11 and R12 are the same as or different from each other, and are each independently a straight-chained or branched alkyl group having 1 to 20 carbon atoms; a monocyclic or polycyclic cycloalkyl group having 6 to 20 carbon atoms; a monocyclic or polycyclic aryl group having 6 to 20 carbon atoms; or a monocyclic or polycyclic heteroaryl group having 2 to 20 carbon atoms, or are bonded to each other to form a monocyclic or polycyclic aliphatic hydrocarbon ring having 6 to 20 carbon atoms, which is unsubstituted or substituted with a straight-chained or branched alkyl group having 1 to 20 carbon atoms.

According to an exemplary embodiment of the present specification, R11 and R12 are the same as or different from each other, and each independently a methyl group; or a phenyl group, or are bonded to each other to form a cyclohexane which is unsubstituted or substituted with a methyl group; or a cyclododecane.

According to an exemplary embodiment of the present specification, R13 and R14 are the same as or different from each other, and are each independently hydrogen; or an aryl group having 6 to 30 carbon atoms, or are bonded to an adjacent group to form a monocyclic or polycyclic aromatic hydrocarbon ring having 6 to 30 carbon atoms.

According to an exemplary embodiment of the present specification, R13 and R14 are the same as or different from each other, and are each independently hydrogen; or an aryl group having 6 to 20 carbon atoms, or are bonded to an adjacent group to form a monocyclic or polycyclic aromatic hydrocarbon ring having 6 to 20 carbon atoms.

According to an exemplary embodiment of the present specification, R13 and R14 are the same as or different from each other, and are each independently hydrogen; a phenyl group; or a naphthyl group, or are bonded to an adjacent group to form a benzene.

According to an exemplary embodiment of the present specification, R15 and R16 are the same as or different from each other, and are each independently hydrogen; or an aryl group having 6 to 30 carbon atoms.

According to an exemplary embodiment of the present specification, R15 and R16 are the same as or different from each other, and are each independently hydrogen; or an aryl group having 6 to 20 carbon atoms.

According to an exemplary embodiment of the present specification, R15 and R16 are the same as or different from each other, and are each independently hydrogen; a phenyl group; or a naphthyl group.

According to an exemplary embodiment of the present specification, Chemical Formula 1a is any one of the following compounds.

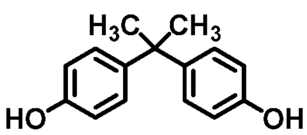
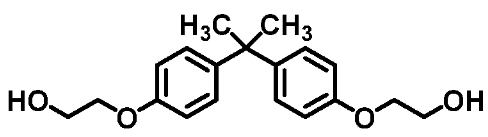

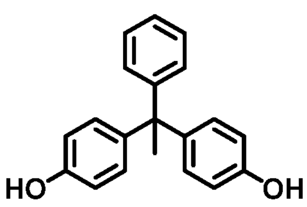
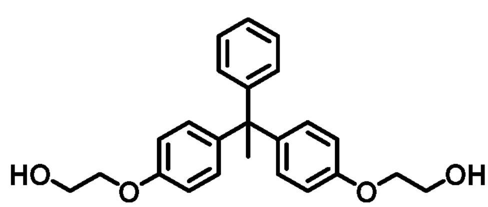

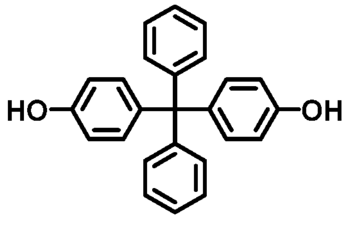
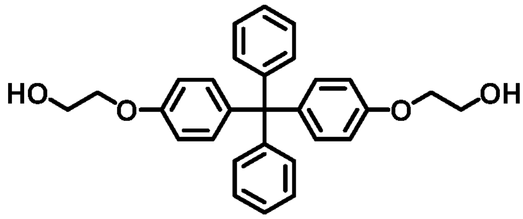

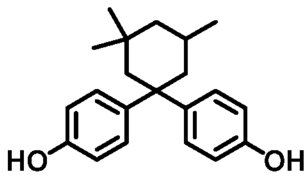
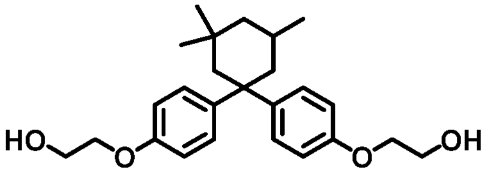

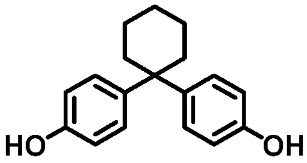
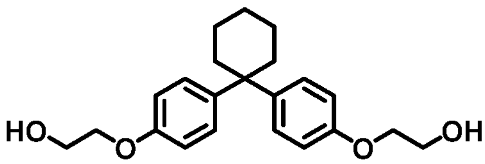

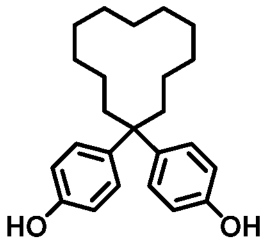
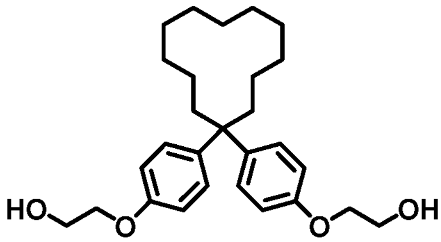

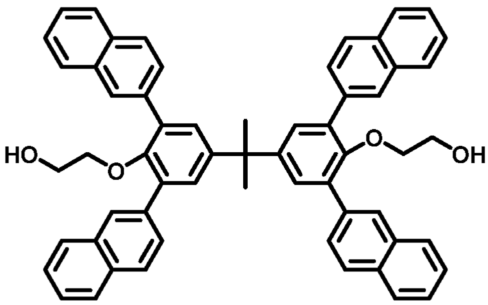
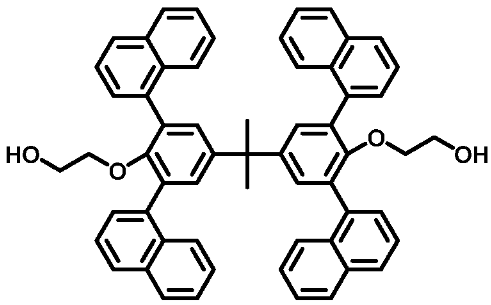

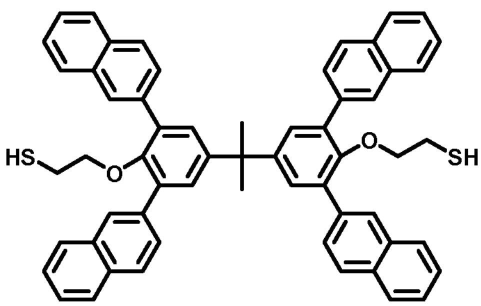
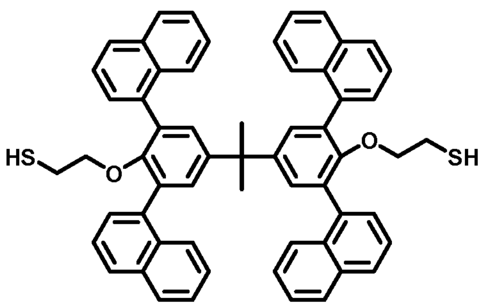

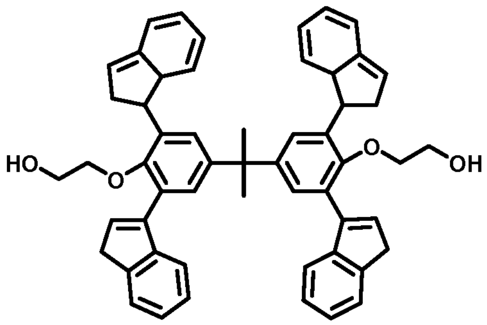

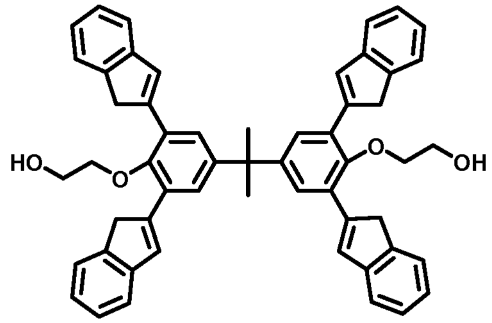

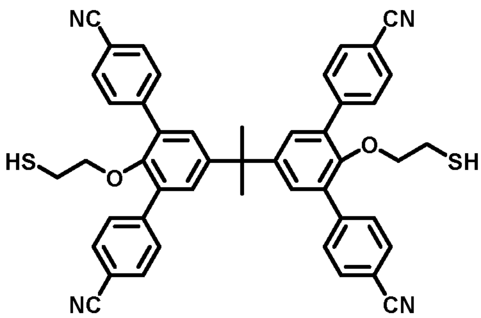

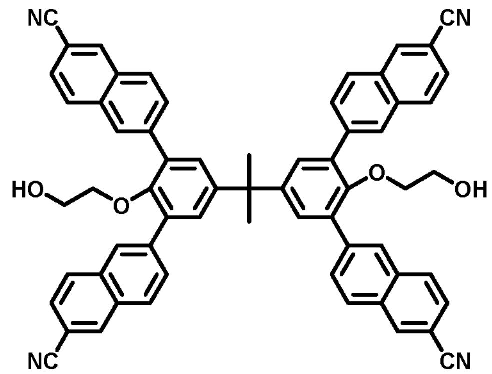

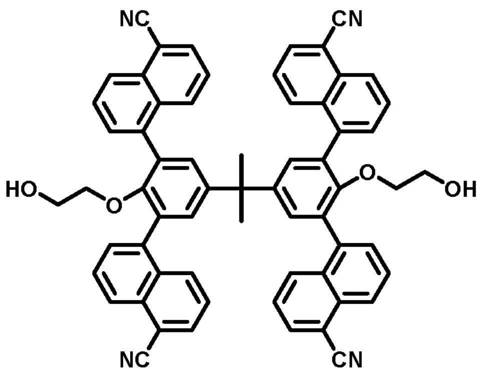

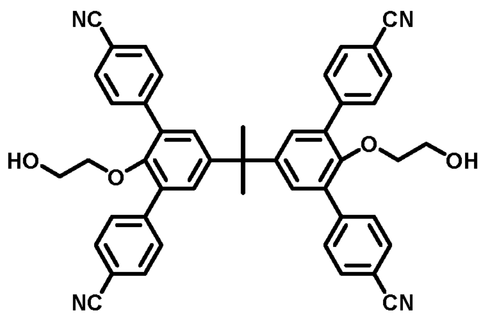

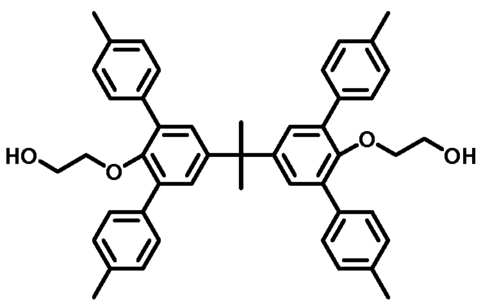

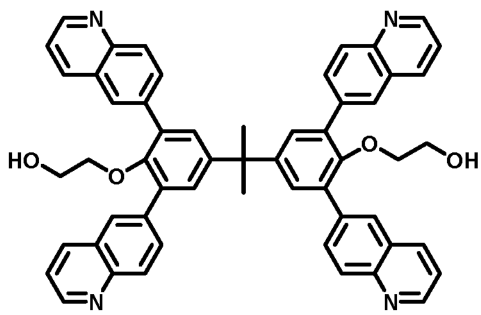

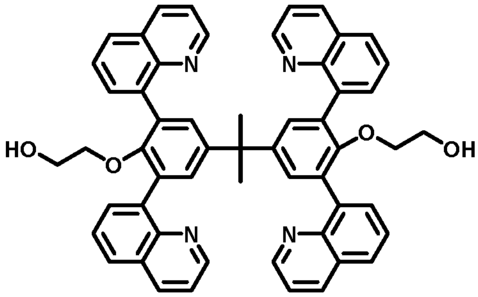

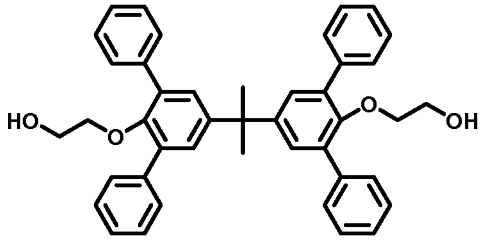

According to an exemplary embodiment of the present specification, Chemical Formula 2a is any one of the following compounds.

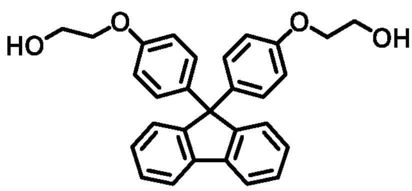

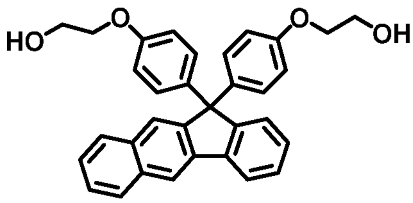

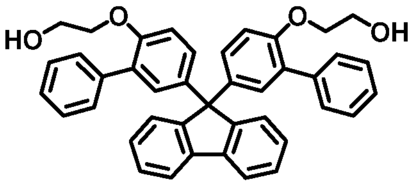

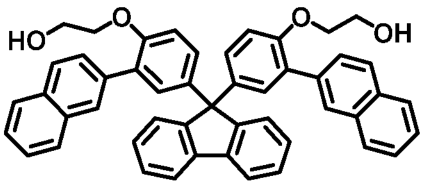

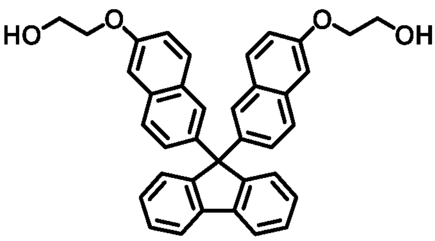

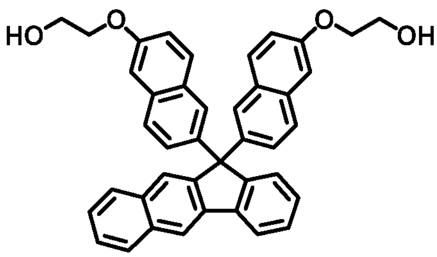

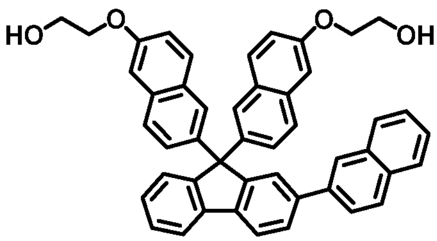

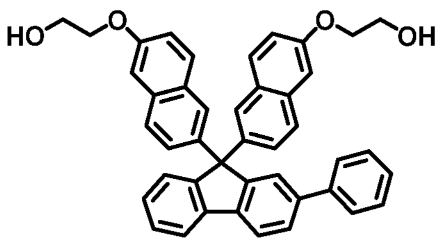

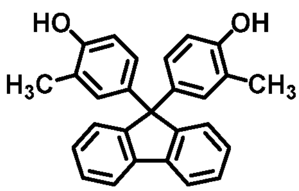

According to an exemplary embodiment of the present specification, Chemical Formula 3a is any one of the following compounds.

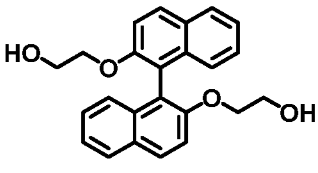

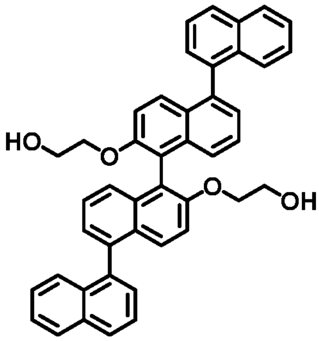

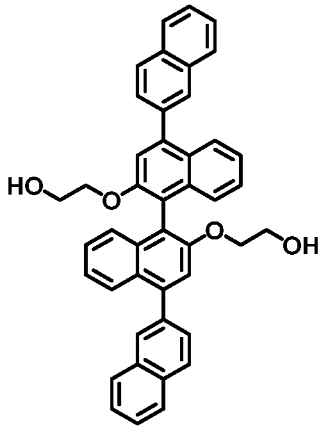

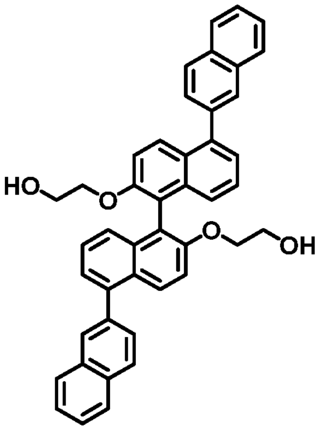

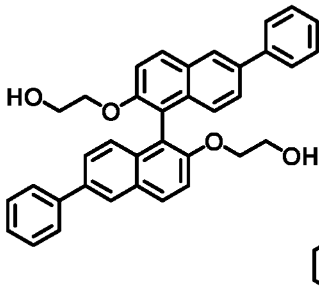

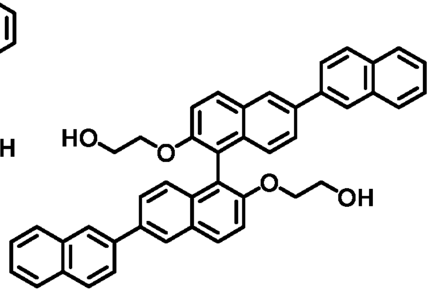

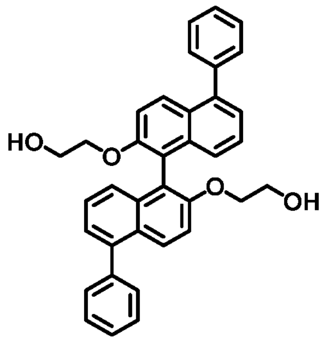

According to an exemplary embodiment of the present specification, the composition for preparing the polycarbonate resin includes the compound of Chemical Formula 1a, the compound of Chemical Formula 2a, and the compound of Chemical Formula 3a, and the compound of Chemical Formula 1a, the compound of Chemical Formula 2a, and the compound of Chemical Formula 3a are included in an amount of 0.01 mole% to 99.98 mole% : 0.01 mole% to 99.98 mole% : 0.01 mole% to 99.98 moleo. Specifically, the compound of Chemical Formula 1a, the compound of Chemical Formula 2a, and the compound of Chemical Formula 3a are included in an amount of 0.1 mole% to 99.8 moleo: 0.1 mole% to 99.8 moleo: 0.1 mole% to 99.8 mole%, 1 mole% to 98 moleo: 1 mole% to 98mole% : 1 mole% to 98 mole%, 5 mole% to 90 moleo: 5 mole% to 90 moleo : 5 mole% to 90 mole%.

According to an exemplary embodiment of the present specification, the composition for preparing the polycarbonate resin includes the compound of Chemical Formula 1a, two or more compounds of Chemical Formula 2a, and the compound of Chemical Formula 3a, and the compound of Chemical Formula 1a, two or more compounds of Chemical Formula 2a, and the compound of Chemical Formula 3a are included in an amount of 0.01 mole% to 99.98 mole% : 0.01 mole% to 99.98 mole% : 0.01 mole% to 99.98 moleo. Specifically, the compound of Chemical Formula 1a, the two or more compounds of Chemical Formula 2a, and the compound of Chemical Formula 3a are included in an amount of 0.1 mole% to 99.8 moleo: 0.1 mole% to 99.8 moleo: 0.1 mole% to 99.8 mole%, 1 mole% to 98 moleo: 1 mole% to 98mole% : 1 mole% to 98 mole%, 5 mole% to 90 moleo: 5 mole% to 90 mole% : 5 mole% to 90 mole%.

When Chemical Formulae 1a, 2a and 3a are included in the above content, the processability of the polycarbonate resin is excellent, the glass transition temperature (Tg) and refractive index can be adjusted, and the chain

behavior of the polycarbonate resin can be made flexible, so that there is a technical effect advantageous for the injection processing of a molded article.

According to an exemplary embodiment of the present specification, the polycarbonate precursor is included in an amount of 50 parts by mol to 150 parts by mol, preferably 100 parts by mol with respect to 100 parts by mol of the total of the compound of Chemical Formula 1a, a compound of the following Chemical Formula 2a, and a compound of the following Chemical Formula 3a in the composition for preparing the polycarbonate resin.

According to an exemplary embodiment of the present specification, the polycarbonate precursor is included in an amount of 50 parts by mol to 150 parts by mol, preferably 100 parts by mol with respect to 100 parts by mol of the total of the compound of Chemical Formula 1a, the two or more compounds of Chemical Formula 2a, and the compound of Chemical Formula 3a in the composition for preparing the polycarbonate resin.

When the polycarbonate precursor is included in the above parts by mol, it is possible to prepare a polycarbonate resin that has excellent transparency, heat resistance, refractive index, birefringence and strength, and good processability.

The composition for preparing a polycarbonate resin may further include a solvent.

The solvent may be, for example, diphenyl ether, dimethylacetamide or methanol, but is not limited thereto, and any solvent applied in the art may be appropriately adopted.

The solvent may be included in an amount of 5 parts by weight to 60 parts by weight with respect to 100 parts by weight of the composition for preparing a resin.

The solvent may be included in an amount of preferably 5 parts by weight to 50 parts by weight, 7 parts by weight to 45 parts by weight or 8 parts by weight to 40 parts by weight with respect to 100 parts by weight of the composition for preparing a resin.

According to an exemplary embodiment of the present specification, the polycarbonate precursor is included in an amount of 50 to 150 parts by weight with respect to 100 parts by weight of the composition for preparing the polycarbonate resin.

When the polycarbonate precursor is included in the above parts by weight, it is possible to prepare a polycarbonate resin that has excellent transparency, heat resistance, refractive index, birefringence and strength, and good processability.

In an exemplary embodiment of the present specification, the compound of Chemical Formula 1a may be included in an amount of 1 part by weight to 100 parts by weight or 1 part by weight to 99 parts by weight with respect to 100 parts by weight of the composition for preparing a polycarbonate resin.

The compound of Chemical Formula 1a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

In an exemplary embodiment of the present specification, the compound of Chemical Formula 2a may be included in an amount of 0 part by weight to 99 parts by weight, or 1 part by weight to 99 parts by weight with respect to 100 parts by weight of the composition for preparing a polycarbonate resin.

The compound of Chemical Formula 2a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

The two or more compounds of Chemical Formula 2a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

In an exemplary embodiment of the present specification, the compound of Chemical Formula 3a may be included in an amount of 0 part by weight to 99 parts by weight, or 1 part by weight to 99 parts by weight with respect to 100 parts by weight of the composition for preparing a polycarbonate resin.

The compound of Chemical Formula 3a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

According to an exemplary embodiment of the present specification, the polycarbonate precursor is a compound of the following Chemical Formula A.

[Chemical Formula A]

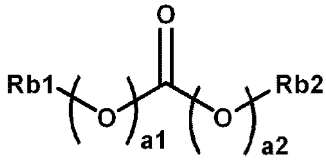

In Chemical Formula A,

Rb1 and Rb2 are the same as or different from each other, and are each independently a halogen group; a hydroxyl group; a substituted or unsubstituted alkyl group; a substituted or unsubstituted cycloalkyl group; or a substituted or unsubstituted aryl group, and

a1 and a2 are each 0 or 1.

According to an exemplary embodiment of the present specification, Rb1 and Rb2 are the same as or different from each other, and are each independently a halogen group; a substituted or unsubstituted straight-chained or branched alkyl group having 1 to 30 carbon atoms; a substituted or unsubstituted monocyclic or polycyclic cycloalkyl group having 6 to 30 carbon atoms; or a substituted or unsubstituted monocyclic or polycyclic aryl group having 6 to 30 carbon atoms.

According to an exemplary embodiment of the present specification, Rb1 and Rb2 are the same as or different from each other, and are each independently a halogen group; a substituted or unsubstituted straight-chained or branched alkyl group having 1 to 20 carbon atoms; a substituted or unsubstituted monocyclic or polycyclic cycloalkyl group having 6 to 20 carbon atoms; or a substituted or unsubstituted monocyclic or polycyclic aryl group having 6 to 20 carbon atoms.

According to an exemplary embodiment of the present specification, Rb1 and Rb2 are the same as or different from each other, and are each independently a halogen group; a straight-chained or branched alkyl group having 1 to 30 carbon atoms; a monocyclic or polycyclic cycloalkyl group having 6 to 30 carbon atoms; or a monocyclic or polycyclic aryl group having 6 to 30 carbon atoms.

According to an exemplary embodiment of the present specification, Rb1 and Rb2 are the same as or different from each other, and are each independently a halogen group; a straight-chained or branched alkyl group having 1 to 20 carbon atoms; a monocyclic or polycyclic cycloalkyl group having 6 to 20 carbon atoms; or a monocyclic or polycyclic aryl group having 6 to 20 carbon atoms.

According to an exemplary embodiment of the present specification, Rb1 and Rb2 are the same as or different from each other, and are each independently -Cl; a methyl group; an ethyl group; an n-propyl group; an n-butyl group; an isopropyl group; an isobutyl group; or a phenyl group.

According to an exemplary embodiment of the present specification, Chemical Formula A is any one selected from the following compounds.

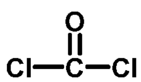
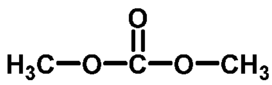
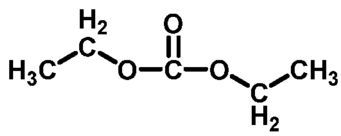

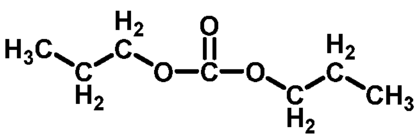
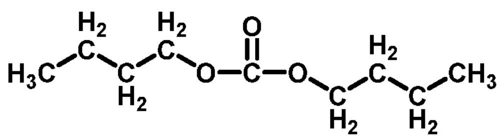

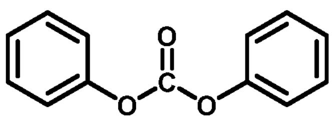
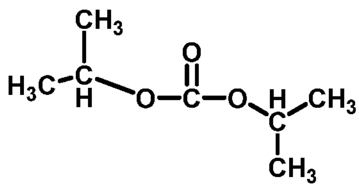

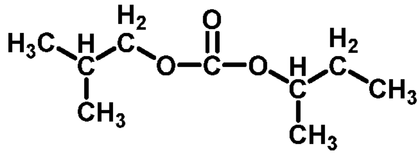

The polycarbonate precursor serves to link an additional comonomer, if necessary, and other specific examples thereof which may be applied in addition to the compound represented by Chemical Formula A include phosgene, triphosgene, diphosgene, bromophosgene, dimethyl carbonate, diethyl carbonate, dibutyl carbonate, dicyclohexyl carbonate, ditolyl carbonate, bis(chlorophenyl) carbonate, m-cresyl carbonate, dinaphthyl carbonate, bis(diphenyl) carbonate, bishaloformate, or the like, and any one of them or a mixture of two or more thereof may be used.

In an exemplary embodiment of the present specification, it is more preferred that the polycarbonate resin is polymerized from the compound of Chemical Formula 1a, the compound of Chemical Formula 2a, the compound of Chemical Formula 3a, and the polycarbonate precursor of Chemical Formula A.

In an exemplary embodiment of the present specification, it is more preferred that the polycarbonate resin is polymerized from the compound of Chemical Formula 1a, the two or more compounds of Chemical Formula 2a, the compound of Chemical Formula 3a, and the polycarbonate precursor of Chemical Formula A.

The unit of the above-described Chemical Formula 1 may be formed by polymerizing the compound of Chemical Formula 1a and the polycarbonate precursor of Chemical Formula A, the unit of the above-described Chemical Formula 2 may be formed by polymerizing the compound of Chemical Formula 2a and the polycarbonate precursor of Chemical Formula A, and the unit of the above-described Chemical Formula 3 may be formed by polymerizing the compound of Chemical Formula 3a and the polycarbonate precursor of Chemical Formula A.

By polymerizing the compound of Chemical Formula 1a and the polycarbonate precursor of Chemical Formula A, the unit of the above-described Chemical Formula 1 may be formed.

The compound of Chemical Formula 1a may be used in an amount of 1 part by mol to 100 parts by mol, and 1 part by mol to 99 parts by mol with respect to 100 parts by mol of the entire monomer constituting the polycarbonate resin including the unit of Chemical Formula 1.

The polycarbonate precursor of Chemical Formula A may be used in an amount of 50 parts by mol to 150 parts by mol with respect to 100 parts by mol of the entire monomer of the compound of Chemical Formula 1a constituting the resin.

By polymerizing the compound of Chemical Formula 2a and the polycarbonate precursor of Chemical Formula A, the unit of the above-described Chemical Formula 2 may be formed.

The compound of Chemical Formula 2a may be used in an amount of 1 part by mol to 100 parts by mol, and 1 part by mol to 99 parts by mol with respect to 100 parts by mol of the entire monomer constituting the polycarbonate resin including the unit of Chemical Formula 2.

The polycarbonate precursor of Chemical Formula A may be used in an amount of 50 parts by mol to 150 parts by mol with respect to 100 parts by mol of the entire monomer of the compound of Chemical Formula 2a constituting the resin.

By polymerizing the compound of Chemical Formula 3a and the polycarbonate precursor of Chemical Formula A, the unit of the above-described Chemical Formula 3 may be formed.

The compound of Chemical Formula 3a may be used in an amount of 1 part by mol to 100 parts by mol, and 1 part by mol to 99 parts by mol with respect to 100 parts by mol of the entire monomer constituting the polycarbonate resin including the unit of Chemical Formula 3.

The polycarbonate precursor of Chemical Formula A may be used in an amount of 50 parts by mol to 150 parts by mol with respect to 100 parts by mol of the entire monomer of the compound of Chemical Formula 3a constituting the resin.

The polycarbonate precursor of Chemical Formula A may be used in an amount of 50 parts by mol to 150 parts by mol with respect to 100 parts by mol of the total of the compound of Chemical Formula 1a, a compound of the following Chemical Formula 2a, and the compound of Chemical Formula 3a constituting the resin.

The polycarbonate precursor of Chemical Formula A may be used in an amount of 50 parts by mol to 150 parts by mol with respect to 100 parts by mol of the total of the compound of Chemical Formula 1a, the two or more compounds of Chemical Formula 2a, and the compound of Chemical Formula 3a constituting the resin.

For the polymerization of the resin according to the present specification, methods known in the art may be used.

It is preferred that the polymerization is performed by a melt polycondensation method.

In the melt polycondensation method, a catalyst may be further applied as needed using the composition for preparing a polycarbonate resin, and melt polycondensation may be performed under heating and further under normal pressure or reduced pressure while removing by-products by an ester exchange reaction. As the catalyst, a material generally applied in the art may be adopted.

Specifically, in the melt polycondensation method, it is preferred that the compound of Chemical Formula 1a; the compound of Chemical Formula 2a; the compound of Chemical Formula 3a; and the polycarbonate precursor are melted in a reaction vessel, and then a reaction is performed in a state where a by-product compound is allowed to stay.

More specifically, in the melt polycondensation method, it is preferred that the compound of Chemical Formula 1a; the two or more compounds of Chemical Formula 2a; the compound of Chemical Formula 3a; and the polycarbonate precursor are melted in a reaction vessel, and then a reaction is performed in a state where a by-product compound is allowed to stay.

In order to allow the by-product compound to stay, the reaction device may be closed, or pressure may be controlled by reducing pressure or increasing pressure.

The reaction time of this process is 20 minutes or more and 600 minutes or less, preferably 40 minutes or more and 450 minutes or less, and more preferably 60 minutes or more and 350 minutes or less.

In this case, when the by-product compound is distilled off immediately after being produced, a resin to be finally obtained has a small content of high molecular weight materials. However, when the by-product compound is allowed to stay in the reaction vessel for a certain period of time, the finally obtained resin is obtained to have a large content of high molecular weight materials.

The melt polycondensation method may be performed continuously or in a batch manner. The reaction device used for performing the reaction may be a vertical type equipped with a soken impeller, an anchor type impeller, a Maxblend impeller, a helical ribbon type impeller or the like, may be a horizontal type equipped with a paddle blade, a lattice blade, a spectacle-shaped blade or the like, and may be an extruder type equipped with a screw. In addition, it is desirably performed to use a reaction device in which these reaction devices are appropriately combined in consideration of the viscosity of the polymer.

In the method for preparing a polycarbonate resin used in the present specification, the catalyst may be removed or deactivated in order to maintain heat stability and hydrolysis stability after the completion of the polymerization reaction. A method of deactivating the catalyst by adding a known acidic material in the art may be preferably performed.

As the acidic material, for example, esters such as butyl benzoate, aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid esters such as diethyl phenylphosphonate; phosphines such as triphenylphosphine and bis(diphenylphosphino)ethane; boric acids such as boric acid and phenylboric acid; aromatic sulfonic acid salts such as dodecylbenzenesulfonic acid tetrabutylphosphonium salts; organic halides such as stearic acid chloride, benzoyl chloride and p-toluenesulfonic acid chloride; alkylsulfuric acids such as dimethylsulfuric acid; organic halides such as benzyl chloride, and the like are preferably used.

The acidic material may be used in an amount of 0.1 parts by mol to 5 parts by mol, preferably 0.1 parts by mol to 1 part by mol with respect to 100 parts by mol of the catalyst.

When the amount of the acidic material is smaller than 0.1 parts by mol, the deactivation effect becomes insufficient, which is not preferred. Further, when the amount exceeds 5 parts by mol, the heat resistance of the resin deteriorates and the molded article is easily colored, which is not preferred.

After the catalyst is deactivated, a process of devolatilizing a low boiling point compound in the resin may be further performed under a pressure of 0.1 mmHg to 1 mmHg and at a temperature of 200°C to 350°C. In this process, a horizontal-type apparatus equipped with a stirring blade having excellent surface renewal ability such as a paddle blade, a lattice blade, and a spectacle-shaped blade, or a thin film evaporator is preferably used.

It is preferred that the content of foreign materials in the resin of the present specification is as small as possible, and filtration of a melting raw material, filtration of a catalyst solution, and the like are preferably performed.

The mesh of the filter used in the filtration is preferably 5 μm or less, and more preferably 1 μm or less. In addition, filtration of the produced resin using a polymer filter is preferably performed. The mesh of the polymer filter is preferably 100 μm or less, and more preferably 30 μm or less. Furthermore, a process of obtaining a resin pellet needs to be performed in a low-dust environment, and the environment is preferably Class 6 or lower, and more preferably Class 5 or lower.

Further, examples of a method of molding a molded article including the polycarbonate resin include compression molding, molds, roll processing, extrusion molding, stretching, and the like in addition to injection molding, but are not limited thereto.

Another exemplary embodiment of the present specification provides a polycarbonate resin composition including the resin according to the above-described exemplary embodiments.

In an exemplary embodiment of the present specification, the polycarbonate resin may be included in an amount of 1

part by weight to 80 parts by weight based on 100 parts by weight of the polycarbonate resin composition.

In an exemplary embodiment of the present specification, the polycarbonate resin composition may further include a solvent. The solvent may be, for example, dimethylacetamide or 1,2-dichlorobenzene.

The solvent may be included in an amount of 20 parts by weight to 99 parts by weight based on 100 parts by weight of the polycarbonate resin composition.

The polycarbonate resin composition may further include an additional monomer in addition to the compound of Chemical Formula 1a. The additional monomer is not particularly limited, and a monomer generally applied in the art related to the polycarbonate may be appropriately adopted as long as the main physical properties of the polycarbonate resin composition are not changed. The additional monomer may be used in an amount of 1 part by mol to 50 parts by mol with respect to 100 parts by mol of the entire monomer constituting the resin including the unit of Chemical Formula 1.

The polycarbonate resin composition may further include one or more selected from the group consisting of an additive, for example, an antioxidant, a plasticizer, an anti-static agent, a nucleating agent, a flame retardant, a lubricant, an impact modifier, a fluorescent brightener, a UV absorber, an inorganic additive, a pigment and a dye, if necessary, in addition to a resin including the unit of Chemical Formula 1.

The additive may be included in an amount of 1 part by weight to 99 parts by weight based on 100 parts by weight of the polycarbonate resin composition.

The type of antioxidant, plasticizer, anti-static agent, nucleating agent, flame retardant, lubricant, impact modifier, fluorescent brightener, UV absorber, inorganic additive, pigment or dye is not particularly limited, and those applied in the art may be appropriately adopted.

Still another exemplary embodiment of the present specification provides a molded article including the resin composition according to the above-described exemplary embodiments.

In an exemplary embodiment of the present specification, the molded article may be prepared from the polycarbonate resin composition or a cured product thereof.

As an example of a method of preparing the molded article, it is possible to include mixing the polycarbonate resin and the additive well using a mixer, preparing the resulting mixture as a pellet by extrusion molding the mixture using an extruder, drying the pellet, and then injecting the pellet using an injection molder.

In an exemplary embodiment of the present specification, the molded article is an optical lens.

In an exemplary embodiment of the present specification, the optical lens has a thickness of 0.1 um to 30 mm.

An optical lens according to an exemplary embodiment of the present specification has a high refractive index, and thus may implement an optical lens with a small thickness.

The optical lens is manufactured using the polycarbonate resin, has a small thickness, a high refractive index and high transparency, and may be preferably applied to camera, mobile, vehicle, and self-driving sensor lenses.

In an exemplary embodiment of the present specification, the molded article is an optical fiber.

In an exemplary embodiment of the present specification, the molded article is an optical film or optical thin film. The optical film or optical thin film is manufactured using the polycarbonate resin, has a small thickness and excellent light harvesting effect and light diffusion effect, and may be preferably applied to backlight modules, flat lenses, and meta lenses of liquid crystal displays, and the like.

In an exemplary embodiment of the present specification, the optical film or optical thin film has a thickness of 0.1 nm to 10 mm.

In an exemplary embodiment of the present specification, the molded article is an optical resin. The optical resin is manufactured using the polycarbonate resin, and has a low optical loss due to its small thickness, high refractive index and low birefringence.

In an exemplary embodiment of the present specification, the molded article is an LED encap.

[Mode for Invention]

Hereinafter, the present specification will be exemplified in more detail through Examples.

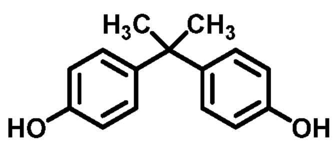

monomer 1-1

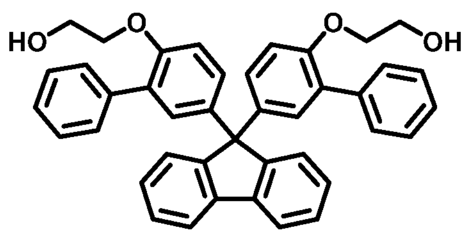

monomer 2-1

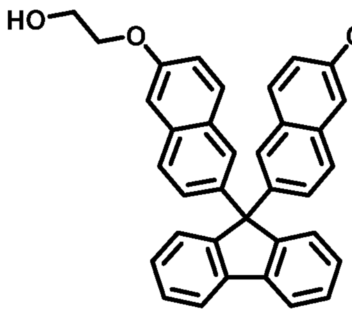

**monomer 2-2**

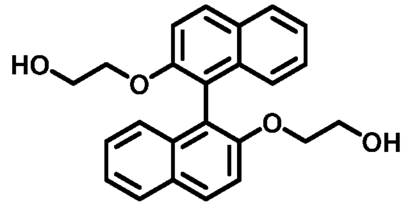

**monomer 3-1**

Preparation Example 1.

3.423 g (0.015 mol) of Monomer 1-1, 14.177 g (0.024 mol) of Monomer 2-1, 8.618 g (0.016 mol) of Monomer 2-2, 16.837 g (0.045 mol) of Monomer 3-1, and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 1, which is a polymerized polymer molten resin, was obtained by blowing nitrogen into the reactor to create a normal pressure atmosphere.

Preparation Example 2.

1.072 g (0.0047 mol) of Monomer 1-1, 5.907 g (0.01 mol) of Monomer 2-1, 15.243 g (0.0283 mol) of Monomer 2-2, 21.326 g (0.057 mol) of Monomer 3-1, and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 2, which is a polymerized polymer molten resin, was obtained by blowing nitrogen into the reactor to create a normal pressure atmosphere.

Preparation Example 3.

22.829g (0.100 mol) of Monomer 1-1 and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 1, which is a polymerized polymer molten resin, was obtained by blowing nitrogen into the reactor to create a normal pressure atmosphere.

Preparation Example 4.

37.415g (0.100 mol) of Monomer 3-1 and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 2, which is a polymerized polymer molten resin, was obtained by blowing nitrogen into the reactor to create a normal pressure atmosphere.

Preparation Example 5.

53.864 g (0.100 mol) of Monomer 2-2 and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 3, which is a polymerized polymer molten resin, was obtained by blowing nitrogen into the reactor to create a normal pressure atmosphere.

Preparation Example 6.

59.072g (0.100 mol) of Monomer 2-1 and 21.422 g (0.100 mol) of diphenylcarbonate were melted and reacted at 250°C for 5 hours. As the reaction proceeded, phenol was generated as a by-product, and the degree of decompression

was adjusted up to 1 Torr to remove the phenol. After completion of the reaction, Comparative Example Resin 4, which is a polymerized polymer molten resin, was obtained by blowing nitrogen into the reactor to create a normal pressure atmosphere.

Preparation Example 7.

11.41 g (0.05 mol) of Monomer 1-1, 26.931 g (0.05 mol) of Monomer 2-2, and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 5, which is a polymerized polymer molten resin, was obtained by blowing nitrogen into the reactor to create a normal pressure atmosphere.

Preparation Example 8.

6.846 g (0.03 mol) of Monomer 1-1, 37.703 g (0.07 mol) of Monomer 2-2, and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 6, which is a polymerized polymer molten resin, was obtained by blowing nitrogen into the reactor to create a normal pressure atmosphere.

Preparation Example 9.

11.41 g (0.05 mol) of Monomer 1-1, 18.707g (0.05 mol) of Monomer 3-1, and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 7, which is a polymerized polymer molten resin, was obtained by blowing nitrogen into the reactor to create a normal pressure atmosphere.

Preparation Example 10.

26.931 g (0.05 mol) of Monomer 2-2, 18.707 g (0.05 mol) of Monomer 3-1, and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Comparative Example Resin 8, which is a polymerized polymer molten resin, was obtained by blowing nitrogen into the reactor to create a normal pressure atmosphere.

Example.

For each of the resin samples polymerized in the above Preparation Examples, molecular relaxation time, high shear viscosity, residual phenol content, melt index (MI), refractive index, and glass transition temperature were measured. The molecular relaxation time was measured at 250°C and 0.1 Hz to 100 Hz using a hybrid rheometer (discovery (HR-2)). When strain became 30% by applying shear force at 250°C, and then the force was removed, the viscoelastic behavior of a polymer occurring at high temperature (250°C) was measured by measuring the speed at which the applied shear force returned to 1 Pa (=1 $N/m^2$). The shear force is maximally applied to the extent that the molten polymer moves, and in this case, the stress is 100 Pa or more. Thereafter, the time taken to return to 1 Pa was measured by quickly removing stress, and the results are shown in the following Table 2.

The high shear viscosity was measured at 250°C and 10 Hz to 63 Hz by putting 2 to 5g of the resin sample into a hybrid rheometer (discovery (HR-2)), and the results are shown in the following Table 2.

For the residual phenol content, after 1 g of a solid resin was dissolved in 12 ml of methylene chloride (MC) and 18 ml of methanol (MeOH), the content of residual phenol was calculated by filtering the resulting solution with a filter with a pore size of 2 um and then measuring the HPLC/UV, and is shown in the following Table 2. (Measurement wavelength: 200 um HPCL, mobile phase A: acetonitrile, mobile phase B: $H_2O$, Column: Capcellpak C18 (4.6 mm ID × 50 mm, 5 μm), column temperature: 40°C, Flow rate: 1 ml/min, Injection volume: 5 μl, run time: 10 minutes)

The melt index (MI) was measured using a melt indexer (Mi 2.2) manufactured by Goettfert Inc. A resin sample was dried in an oven at 120°C for 5 hours or more, the dried sample was put into a device and melted for 5 minutes at a measurement temperature (260°C), and then the weight of the sample passing through the nozzle for 5 seconds when applying pressure with a weight of 2.16 kg was measured and converted into a unit of g/10 min to calculate the melt index (MI), and the melt indices are shown in the following Table 2.

A differential scanning calorimeter (DSC) was measured to determine the glass transition temperature (Tg) of the resin. A glass transition temperature (Tg) was obtained on a graph obtained by heating a 5.5 mg to 8.5 mg of the resin sample to 270°C under $N_2$ flow, cooling the resin sample, and then scanning the resin sample while heating the resin sample at a heating rate of 10°C/min during the second heating, and the glass transition temperature (Tg) is shown in the following Table 2.

The refractive index was measured by the prism coupler method. The refractive index was measured at a measurement wavelength of 486 nm, 587 nm, and 656 nm, respectively, and the average values are shown in the following Table 2. The refractive indices measured at each of the wavelengths were all the same.

[Table 1]

In Table 1, the molar ratios of monomers used in the polycarbonate resins used in Examples and Comparative Examples are shown.

| | | Formulation (molar ratio) | | | |
|---|---|---|---|---|---|
| | | Monomer 1-1 | Monomer 2-1 | Monomer 2-2 | Monomer 3-1 |
| Example 1 | Resin 1 | 15 | 24 | 16 | 45 |
| Example 2 | Resin 2 | 4.7 | 10 | 28.3 | 57 |
| Comparative Example 1 | Comparative Example Resin 1 | 100 | - | - | - |
| Comparative Example 2 | Comparative Example Resin 2 | - | - | - | 100 |
| Comparative Example 3 | Comparative Example Resin 3 | - | - | 100 | - |
| Comparative Example 4 | Comparative Example Resin 4 | - | 100 | - | - |
| Comparative Example 5 | Comparative Example Resin 5 | 50 | - | 50 | - |
| Comparative Example 6 | Comparative Example Resin 6 | 30 | | 70 | |
| Comparative Example 7 | Comparative Example Resin 7 | 50 | - | - | 50 |
| Comparative Example 8 | Comparative Example Resin 8 | - | - | 50 | 50 |

[Table 2]

| | | Viscosity (Pa·s) | Viscosity (Pa·s) | Molecular relaxation time (sec) | Refractive index | Residual phenol (ppm) | Tg (°C) | MI |
|---|---|---|---|---|---|---|---|---|
| | | @250°C, 10 Hz | @250°C, 63Hz | | | | | |
| Example 1 | Resin 1 | 76.3 | 60.7 | 3.39 | 1.660 | 470 | 141 | 53 |
| Example 2 | Resin 2 | 146 | 99.4 | 14.2 | 1.669 | 720 | 142 | 41 |
| Comparative Example 1 | Comparative Example | 432 | 345 | 16.1 | 1.638 | 620 | 140 | 28 |
| | Resin 1 | | | | | | | |
| Comparative Example 2 | Comparative Example Resin 2 | 1.43 | 0.8 | 0.17 | 1.668 | 510 | 148 | 16 |

(continued)

| | | Viscosity (Pa·s) @250°C, 10 Hz | Viscosity (Pa·s) @250°C, 63Hz | Molecular relaxation time (sec) | Refractive index | Residual phenol (ppm) | Tg (°C) | MI |
|---|---|---|---|---|---|---|---|---|
| Comparative Example 3 | Comparative Example Resin 3 | 504 | 330 | 36.4 | 1.686 | 40800 | 168 | 3.3 |
| Comparative Example 4 | Comparative Example Resin 4 | 789 | 368 | 48.7 | 1.654 | 1190 | 113 | 112 |
| Comparative Example 5 | Comparative Example Resin 5 | 3197 | 1255 | 141 | 1.652 | 430 | 164 | 3.0 |
| Comparative Example 6 | Comparative Example Resin 6 | 1382 | 588 | 241 | 1.669 | 1400 | 178 | 2.1 |
| Comparative Example 7 | Comparative Example Resin 7 | 3.78 | 3.85 | 0.38 | 1.634 | 470 | 110 | >200 |
| Comparative Example 8 | Comparative Example Resin 8 | 2701 | 870 | 295 | 1.677 | 3180 | 156 | 1.1 |

In Table 2, Tg means glass transition temperature and MI means melt index.

In Table 2, it can be seen that the resins of Examples 1 and 2, which are each the polycarbonate resin according to an exemplary embodiment of the present specification, include the first unit, the second unit and the third unit, and the polycarbonate resin has a relaxation time of 1 second to 15 seconds or 2 seconds to 15 seconds at 250°C and a residual phenol content of less than 3,000 ppm. Specifically, the resins of Examples 1 and 2 have a relaxation time of 3.39 seconds to 14.2 seconds at 250°C and a residual phenol content of 470 ppm to 720 ppm.

In contrast, the polycarbonate resins of Comparative Examples 1 to 4, which are resins each including the first unit, the second unit or the third unit, and the polycarbonate resins of Comparative Examples 5 to 8, which include only two of the first unit to third unit, have a relaxation time of less than 1 second or more than 15 seconds at 250°C and/or a residual phenol content of more than 3,000 ppm. When the relaxation time is less than 1 second, it can be confirmed that the viscosity is also low, and the viscosity of the resin is low and the relaxation time is short, so that it is very difficult to process the resin, and when the relaxation time exceeds 15 seconds, it can be confirmed that the viscosity is high, and the processing load is increased because the viscosity of the resin is high and the relaxation time is long, so that phenomena such as weld lines, cracks, warpage, birefringence, and short molding during injection molding occur.

Further, when the residual phenol content exceeds 3,000 ppm, many problems such as deterioration in strength and physical properties due to the decrease in the molecular weight of the polycarbonate resin, and cracking of the injection product during processing may be induced.

Although Comparative Examples 2, 3, 6, and 8 have a higher refractive index than Examples 1 and 2, in Comparative Examples 2, 3, 6, and 8, the relaxation time at 250°C is less than 1 second or exceeds 15 seconds, so that it is difficult to achieve commercialization because it is difficult to process the resin.

In addition, although Comparative Examples 3 and 8 have a higher refractive index than Examples 1 and 2, in Comparative Examples 3 and 8, the residual phenol content exceeds 3,000 ppm, so that many problems such as deterioration in strength and physical properties due to a decrease in molecular weight of the polycarbonate resin, and cracking of an injection product during processing are induced, thereby leading to a deterioration in processing stability.

Therefore, in the polycarbonate resin according to an exemplary embodiment of the present specification, since the relaxation time is 1 second to 15 seconds or 2 seconds to 15 seconds at 250°C and the residual phenol content satisfies less than 3,000 ppm, the molecular relaxation time is relatively short, so that the cooling time in the mold during injection molding is fast and the processing load is low, and the time between filling cycles is reduced, thereby leading to a decrease in relaxation time. Furthermore, since the residual phenol content is 3,000 ppm or less, a decrease in

molecular weight during processing is small. Therefore, phenomena such as weld lines, cracks, warpage, birefringence, and short molding during injection molding are reduced, and processing stability is excellent.

## Claims

1. A polycarbonate resin having a relaxation time of 2 seconds to 15 seconds at 250°C and a residual phenol content of 3,000 ppm or less.

2. A polycarbonate resin having a relaxation time of 1 second to 15 seconds at 250°C and a residual phenol content of 3,000 ppm or less, and

comprising a first unit of the following Chemical Formula 1; a second unit of the following Chemical Formula 2; and a third unit of the following Chemical Formula 3:

[Chemical Formula 1]

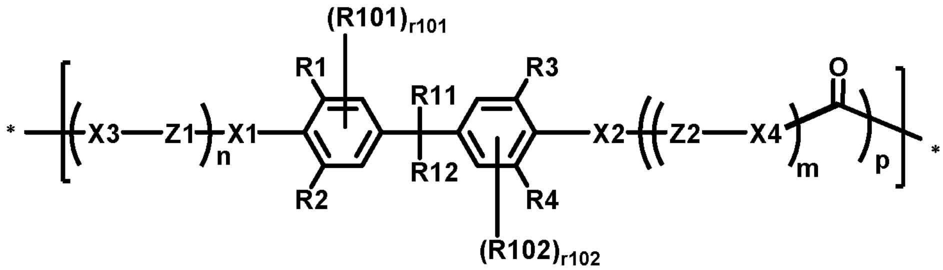

wherein, in Chemical Formula 1,
X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a substituted or unsubstituted condensed ring group of an aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,
R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r101 is 1 or 2, and when r101 is 2, two R101's are the same as or different from each other,
r102 is 1 or 2, and when r102 is 2, two R102's are the same as or different from each other,
m and n are each an integer from 0 to 6,
p is an integer of 1 to 6,
when m, n and p are each 2 or higher, two or more structures in each parenthesis are the same as or different from each other, and
* means a moiety linked to the main chain of the resin,

[Chemical Formula 2]

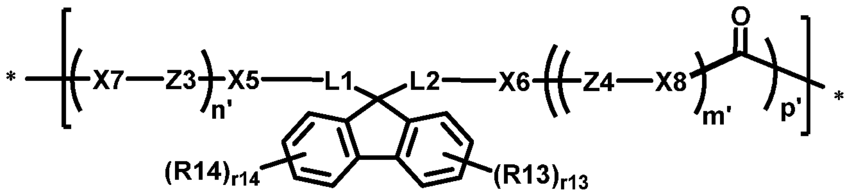

in Chemical Formula 2,
X5 to X8 are the same as or different from each other, and are each independently O or S,
L1 and L2 are the same as or different from each other, and are each independently a substituted or unsubstituted arylene group; or a substituted or unsubstituted heteroarylene group,
R13 and R14 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
Z3 and Z4 are the same as or different from each other, and are each independently a substituted or unsubstituted alkylene group; or a substituted or unsubstituted cycloalkylene group,
m' and n' are each an integer from 0 to 6,
p' is an integer from 1 to 6,
r13 and r14 are each an integer from 1 to 4,
when r13, r14, m', n' and p' are each 2 or higher, two or more structures in each parenthesis are the same as or different from each other, and
* means a moiety linked to the main chain of the resin,

[Chemical Formula 3]

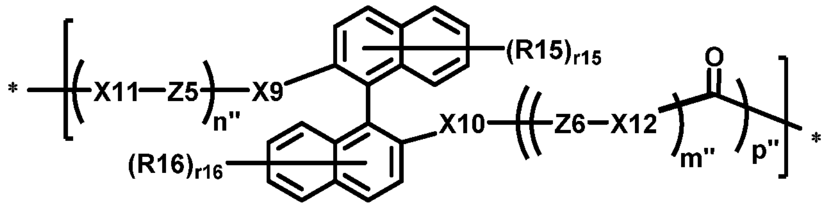

wherein, in Chemical Formula 3,
X9 to X12 are the same as or different from each other, and are each independently O or S,
Z5 and Z6 are the same as or different from each other, and are each independently a substituted or unsubstituted alkylene group; or a substituted or unsubstituted cycloalkylene group,
R15 and R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
m" and n" are each an integer from 0 to 6,
p" is an integer from 1 to 6,
r15 and r16 are each an integer from 1 to 6,
when r15, r16, m", n" and p" are each 2 or higher, two or more structures in each parenthesis are the same as or different from each other, and
* means a moiety linked to the main chain of the resin.

**3.** The polycarbonate resin of claim 1, wherein the polycarbonate resin comprises a first unit of the following Chemical Formula 1; a second unit of the following Chemical Formula 2; and a third unit of the following Chemical Formula 3:

[Chemical Formula 1]

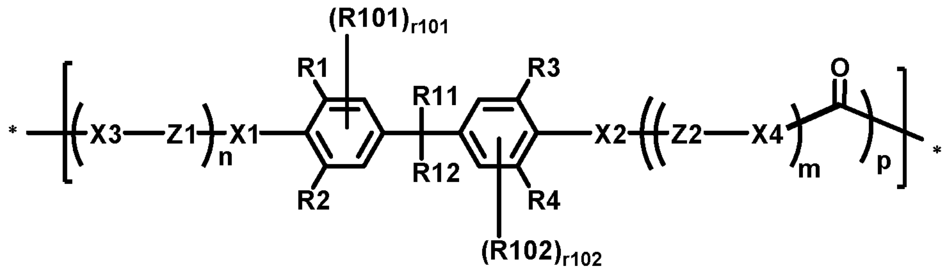

wherein, in Chemical Formula 1,
X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a substituted or unsubstituted condensed ring group of an aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,
R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r101 is 1 or 2, and when r101 is 2, two R101's are the same as or different from each other,
r102 is 1 or 2, and when r102 is 2, two R102's are the same as or different from each other,
m and n are each an integer from 0 to 6,
p is an integer of 1 to 6,
when m, n and p are each 2 or higher, two or more structures in each parenthesis are the same as or different from each other, and
* means a moiety linked to the main chain of the resin,

[Chemical Formula 2]

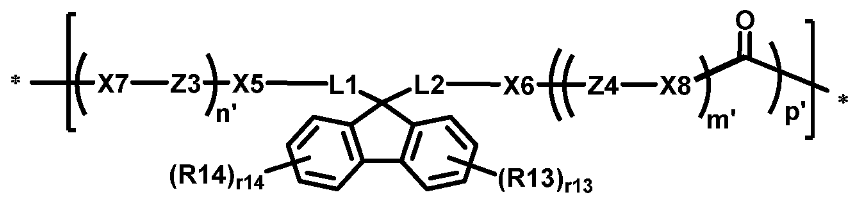

in Chemical Formula 2,
X5 to X8 are the same as or different from each other, and are each independently O or S,
L1 and L2 are the same as or different from each other, and are each independently a substituted or unsubstituted arylene group; or a substituted or unsubstituted heteroarylene group,
R13 and R14 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
Z3 and Z4 are the same as or different from each other, and are each independently a substituted or unsubstituted alkylene group; or a substituted or unsubstituted cycloalkylene group,
m' and n' are each an integer from 0 to 6,
p' is an integer from 1 to 6,
r13 and r14 are each an integer from 1 to 4,

when r13, r14, m', n' and p' are each 2 or higher, two or more structures in each parenthesis are the same as or different from each other, and

* means a moiety linked to the main chain of the resin,

[Chemical Formula 3]

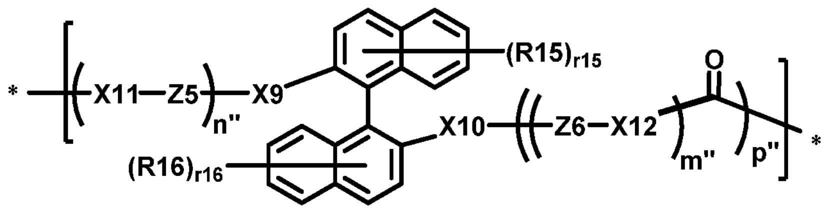

in Chemical Formula 3,

X9 to X12 are the same as or different from each other, and are each independently O or S,

Z5 and Z6 are the same as or different from each other, and are each independently a substituted or unsubstituted alkylene group; or a substituted or unsubstituted cycloalkylene group,

R15 and R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,

m" and n" are each an integer from 0 to 6,

p" is an integer from 1 to 6,

r15 and r16 are each an integer from 1 to 6,

when r15, r16, m", n" and p" are each 2 or higher, two or more structures in each parenthesis are the same as or different from each other, and

* means a moiety linked to the main chain of the resin.

**4.** The polycarbonate resin of any one of claims 1 to 3, wherein the polycarbonate resin has a high shear viscosity of 10 Pa·s to 200 Pa·s at any one or more of 250°C and 10 Hz and 250°C and 63 Hz.

**5.** The polycarbonate resin of claim 2, wherein the polycarbonate resin has a relaxation time of 2 seconds to 15 seconds.

**6.** The polycarbonate resin of any one of claims 1 to 3, wherein the polycarbonate resin has a melt index (MI) of 5 to 150.

**7.** The polycarbonate resin of claim 2 or 3, wherein the polycarbonate resin comprises two or more second units of Chemical Formula 2.

**8.** A method for preparing the polycarbonate resin according to any one of claims 1 to 3, the method comprising: polymerizing a composition for preparing a polycarbonate resin comprising a compound of the following Chemical Formula 1a;

a compound of the following Chemical Formula 2a;

a compound of the following Chemical Formula 3a; and

a polycarbonate precursor:

[Chemical Formula 1a]

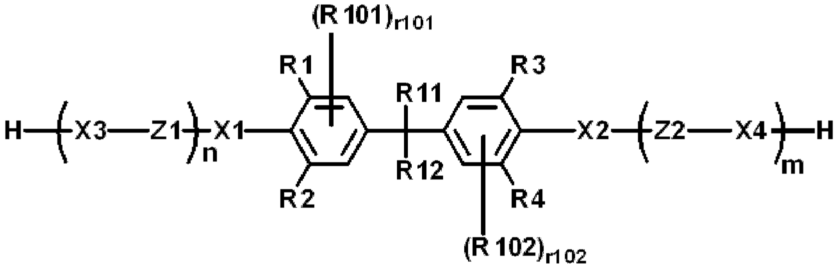

wherein, in Chemical Formula 1a,
X1 to X4 are the same as or different from each other, and are each independently O or S,
R1 to R4 are the same as or different from each other, and are each independently hydrogen; a substituted or unsubstituted alkyl group; a substituted or unsubstituted cycloalkyl group; a substituted or unsubstituted aryl group; a substituted or unsubstituted condensed ring group of an aromatic hydrocarbon ring and an aliphatic hydrocarbon ring; or a substituted or unsubstituted heteroaryl group,
Z1 and Z2 are the same as or different from each other, and are each independently a substituted or unsubstituted alkylene group; or a substituted or unsubstituted cycloalkylene group,
R11 and R12 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to each other to form a substituted or unsubstituted hydrocarbon ring,
R101 and R102 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group,
r101 is 1 or 2, and when r101 is 2, two R101's are the same as or different from each other,
r102 is 1 or 2, and when r102 is 2, two R102's are the same as or different from each other,
m and n are each an integer from 0 to 6,
when m and n are each 2 or higher, two or more structures in each parenthesis are the same as or different from each other,

[Chemical Formula 2a]

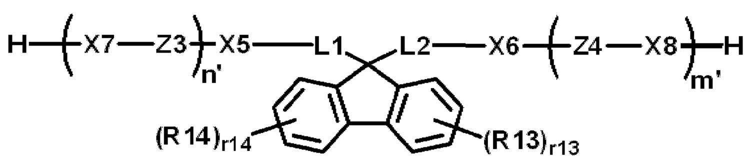

[Chemical Formula 3a]

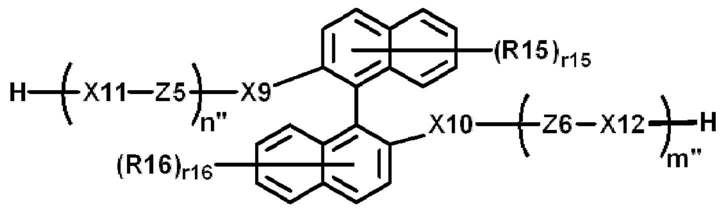

in Chemical Formulae 2a and 3a,
X5 to X12 are the same as or different from each other, and are each independently O or S,
L1 and L2 are the same as or different from each other, and are each independently a substituted or unsubstituted arylene group; or a substituted or unsubstituted heteroarylene group,
Z3 to Z6 are the same as or different from each other, and are each independently a substituted or unsubstituted alkylene group; or a substituted or unsubstituted cycloalkylene group,
R13 to R16 are the same as or different from each other, and are each independently hydrogen; a substituted or unsubstituted alkyl group; a substituted or unsubstituted cycloalkyl group; a substituted or unsubstituted aryl group; or a substituted or unsubstituted heteroaryl group, or are bonded to an adjacent group to form a substituted or unsubstituted hydrocarbon ring,
r13 and r14 are each an integer from 1 to 4,
r15 and r16 are each an integer from 1 to 6,
m', m", n' and n" are each an integer from 0 to 6, and
when r13 to r16, m', m", n' and n" are each 2 or higher, two or more structures in each parenthesis are the same as or different from each other.

**9.** The method of claim 8, wherein in the method for preparing the polycarbonate resin, the compound of Chemical Formula 1a, the compound of Chemical Formula 2a, and the compound of Chemical Formula 3a are comprised in

an amount of 0.01 mole% to 99.98 mole% : 0.01 mole% to 99.98 mole% : 0.01 mole% to 99.98 mole%.

**10.** The method of claim 8, wherein the polycarbonate precursor is a compound of the following Chemical Formula A:

[Chemical Formula A]

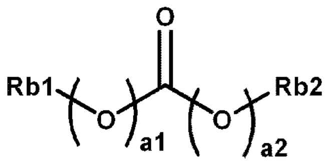

in Chemical Formula A,
Rb1 and Rb2 are the same as or different from each other, and are each independently a halogen group; a hydroxyl group; a substituted or unsubstituted alkyl group; a substituted or unsubstituted cycloalkyl group; or a substituted or unsubstituted aryl group, and
a1 and a2 are each 0 or 1.

**11.** A polycarbonate resin composition comprising the polycarbonate resin according to any one of claims 1 to 3.

**12.** A molded article comprising the polycarbonate resin composition according to claim 11.

**13.** The molded article of claim 12, wherein the molded article is an optical lens.

**INTERNATIONAL SEARCH REPORT**

International application No. **PCT/KR2023/015162**

**A. CLASSIFICATION OF SUBJECT MATTER**

**C08G 64/00**(2006.01)i; **C08L 69/00**(2006.01)i; **G02B 1/04**(2006.01)i; **C08G 64/16**(2006.01)i; **C08G 64/30**(2006.01)i

According to International Patent Classification (IPC) or to both national classification and IPC

**B. FIELDS SEARCHED**

Minimum documentation searched (classification system followed by classification symbols)

C08G 64/00(2006.01); C08G 63/199(2006.01); C08G 63/64(2006.01); C08G 63/672(2006.01); C08G 64/04(2006.01); C08G 64/16(2006.01); G02B 3/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 폴리카보네이트(polycarbonate), 광학렌즈(optical lens), 이완시간(relaxation time), 페놀(phenol)

**C. DOCUMENTS CONSIDERED TO BE RELEVANT**

| Category* | Citation of document, with indication, where appropriate, of the relevant passages | Relevant to claim No. |
|---|---|---|
| X | KR 10-2018-0079359 A (MITSUBISHI GAS CHEMICAL COMPANY, INC.) 10 July 2018 (2018-07-10) See claims 1-15; and paragraphs [0247]-[0250], [0281], [0282] and [0294]-[0297]. | 1-13 |
| A | WO 2021-230085 A1 (MITSUBISHI GAS CHEMICAL COMPANY, INC.) 18 November 2021 (2021-11-18) See paragraphs [0022] and [0080]-[0083]; and claims 1-9. | 1-13 |
| A | KR 10-2019-0140074 A (TEIJIN LIMITED) 18 December 2019 (2019-12-18) See claims 1-15. | 1-13 |
| A | JP 2018-104691 A (OSAKA GAS CHEM. KK) 05 July 2018 (2018-07-05) See claims 1-11. | 1-13 |
| A | KR 10-2020-0041975 A (MITSUBISHI GAS CHEMICAL COMPANY, INC.) 22 April 2020 (2020-04-22) See claims 1-27. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 January 2024** | **25 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/015162**

| Patent document cited in search report | Publication date (day/month/year) | Patent family member(s) | Publication date (day/month/year) |
|---|---|---|---|
| KR 10-2018-0079359 A | 10 July 2018 | CN 108350163 A | 31 July 2018 |
| | | CN 108350163 B | 06 July 2021 |
| | | CN 110256661 A | 20 September 2019 |
| | | CN 110256661 B | 08 April 2022 |
| | | CN 113248697 A | 13 August 2021 |
| | | CN 113248697 B | 21 March 2023 |
| | | EP 3372627 A1 | 12 September 2018 |
| | | EP 3372627 B1 | 27 May 2020 |
| | | EP 3536728 A1 | 11 September 2019 |
| | | EP 3536728 B1 | 12 October 2022 |
| | | JP 2019-143152 A | 29 August 2019 |
| | | JP 2022-046587 A | 23 March 2022 |
| | | JP 7047381 B2 | 05 April 2022 |
| | | JP 7047808 B2 | 05 April 2022 |
| | | JP 7238952 B2 | 14 March 2023 |
| | | KR 10-2019-0041544 A | 22 April 2019 |
| | | TW 201731904 A | 16 September 2017 |
| | | TW 201934604 A | 01 September 2019 |
| | | TW 202140608 A | 01 November 2021 |
| | | TW I727990 B | 21 May 2021 |
| | | TW I741281 B | 01 October 2021 |
| | | TW I806078 B | 21 June 2023 |
| | | US 10955680 B2 | 23 March 2021 |
| | | US 10962793 B2 | 30 March 2021 |
| | | US 2018-0307052 A1 | 25 October 2018 |
| | | US 2019-0235258 A1 | 01 August 2019 |
| | | WO 2017-078074 A1 | 11 May 2017 |
| WO 2021-230085 A1 | 18 November 2021 | CN 115516005 A | 23 December 2022 |
| | | EP 4151668 A1 | 22 March 2023 |
| | | KR 10-2023-0009871 A | 17 January 2023 |
| | | TW 202200670 A | 01 January 2022 |
| | | US 2023-0192951 A1 | 22 June 2023 |
| KR 10-2019-0140074 A | 18 December 2019 | CN 110741030 A | 31 January 2020 |
| | | CN 110741030 B | 17 June 2022 |
| | | CN 113474685 A | 01 October 2021 |
| | | EP 3677614 A1 | 08 July 2020 |
| | | EP 3933456 A1 | 05 January 2022 |
| | | JP 2020-012094 A | 23 January 2020 |
| | | JP 2020-122032 A | 13 August 2020 |
| | | JP 7117932 B2 | 15 August 2022 |
| | | JP 7227345 B2 | 21 February 2023 |
| | | KR 10-2021-0097779 A | 09 August 2021 |
| | | KR 10-2362026 B1 | 10 February 2022 |
| | | TW 201920352 A | 01 June 2019 |
| | | TW 202045582 A | 16 December 2020 |
| | | TW I787317 B | 21 December 2022 |
| | | US 11261294 B2 | 01 March 2022 |
| | | US 2021-0147621 A1 | 20 May 2021 |
| | | US 2022-0146713 A1 | 12 May 2022 |
| | | WO 2019-044214 A1 | 07 March 2019 |

Form PCT/ISA/210 (patent family annex) (July 2022)

**INTERNATIONAL SEARCH REPORT**
**Information on patent family members**

International application No.
**PCT/KR2023/015162**

| Patent document cited in search report | Publication date (day/month/year) | Patent family member(s) | Publication date (day/month/year) |
|---|---|---|---|
| | | WO 2020-175577 A1 | 03 September 2020 |
| JP 2018-104691 A | 05 July 2018 | JP 7082872 B2 | 09 June 2022 |
| KR 10-2020-0041975 A | 22 April 2020 | CN 111094389 A | 01 May 2020 |
| | | CN 111094389 B | 07 July 2023 |
| | | CN 114716658 A | 08 July 2022 |
| | | CN 114752053 A | 15 July 2022 |
| | | CN 115960345 A | 14 April 2023 |
| | | EP 3677615 A1 | 08 July 2020 |
| | | JP 2023-078400 A | 06 June 2023 |
| | | JP 7255485 B2 | 11 April 2023 |
| | | KR 10-2023-0019988 A | 09 February 2023 |
| | | KR 10-2509154 B1 | 10 March 2023 |
| | | KR 10-2511651 B1 | 17 March 2023 |
| | | TW 201920353 A | 01 June 2019 |
| | | TW 202239811 A | 16 October 2022 |
| | | TW 202321344 A | 01 June 2023 |
| | | TW I793157 B | 21 February 2023 |
| | | US 11434327 B2 | 06 September 2022 |
| | | US 2020-0181325 A1 | 11 June 2020 |
| | | US 2022-0380532 A1 | 01 December 2022 |
| | | WO 2019-044875 A1 | 07 March 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220127150
- KR 1020220141544